(19) Europäisches Patentamt / European Patent Office / Office européen des brevets

(11) **EP 3 872 948 B1**

(12) **EUROPEAN PATENT SPECIFICATION**

(45) Date of publication and mention
of the grant of the patent:
**09.11.2022 Bulletin 2022/45**

(21) Application number: **20845652.5**

(22) Date of filing: **31.08.2020**

(51) International Patent Classification (IPC):
*H02J 3/06* $^{(2006.01)}$     *G06Q 10/06* $^{(2012.01)}$
*G06Q 50/06* $^{(2012.01)}$

(52) Cooperative Patent Classification (CPC):
**H02J 3/0075; G06Q 10/063; G06Q 50/06;**
**H02J 3/06;** H02J 2203/10; H02J 2203/20;
Y02B 70/3225; Y02E 60/00; Y04S 10/50;
Y04S 20/222; Y04S 40/20

(86) International application number:
**PCT/CN2020/112472**

(87) International publication number:
**WO 2021/135332 (08.07.2021 Gazette 2021/27)**

(54) **EDGE COMPUTING-BASED MULTI-AGENT LOAD REGULATION AND CONTROL METHOD**

EDGE-COMPUTING-BASIERTES MEHRAGENTEN-LASTREGELUNGS- UND
STEUERUNGSVERFAHREN

PROCÉDÉ DE RÉGULATION ET DE COMMANDE DE CHARGE MULTI-AGENT BASÉ SUR
L'INFORMATIQUE EN PÉRIPHÉRIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2019 CN 201911403025**

(43) Date of publication of application:
**01.09.2021 Bulletin 2021/35**

(73) Proprietor: **Northeastern University
Shenyang, Liaoning 110819 (CN)**

(72) Inventors:
• **ZHANG, Huaguang**
**Shenyang**
**Liaoning 110819 (CN)**
• **YANG, Dongsheng**
**Shenyang**
**Liaoning 110819 (CN)**
• **ZHOU, Bowen**
**Shenyang**
**Liaoning 110819 (CN)**
• **WANG, Daqian**
**Shenyang**
**Liaoning 110819 (CN)**

• **LIU, Xinrui**
**Shenyang**
**Liaoning 110819 (CN)**
• **YANG, Bo**
**Shenyang**
**Liaoning 110819 (CN)**
• **LUO, Yanhong**
**Shenyang**
**Liaoning 110819 (CN)**
• **SUN, Zhenao**
**Shenyang**
**Liaoning 110819 (CN)**
• **LIANG, Xue**
**Shenyang**
**Liaoning 110819 (CN)**
• **LIU, Zhenwei**
**Shenyang**
**Liaoning 110819 (CN)**
• **WANG, Zhiliang**
**Shenyang**
**Liaoning 110819 (CN)**
• **JIN, Shuowei**
**Shenyang**
**Liaoning 110819 (CN)**
• **NI, Xueqing**
**Shenyang**
**Liaoning 110819 (CN)**

• **YANG, Jun**
  **Shenyang**
  **Liaoning 110819 (CN)**

(74) Representative: **Office Kirkpatrick**
  **Avenue Wolfers, 32**
  **1310 La Hulpe (BE)**

(56) References cited:
  **CN-A- 104 600 720    CN-A- 106 208 102**
  **CN-A- 106 684 932    CN-A- 107 453 369**
  **CN-A- 107 464 044    CN-A- 108 599 270**
  **CN-A- 108 808 734    CN-A- 109 638 964**
  **CN-A- 110 571 865    CN-A- 111 030 123**
  **US-A1- 2013 304 266   US-A1- 2016 179 077**

**Description**

BACKGROUND OF THE INVENTION

1. Field of the Invention

The invention relates to the technical field of load management under intelligent micro-grid environment, in particular to a multi-agent load regulating and controlling method based on edge computing.

2. The Prior Arts

With development of the Internet of Things technology and the communication technology, the data computing manner gradually changes, and more edge computing manners will replace traditional centralized computing manners. A new pattern of constructing and operating charging and changing electricity (energy storing) stations and data center stations using the transformer substation resources has become a new research direction. It means that the transformer substation will gradually develop from conventional transformer substation to the direction of digital and intelligent transformer substation. Meanwhile, emerged transformer substation data agent node technology will also become the research emphasis.

The concept of an agent is proposed by Minsky in 1980s, but so far, there is no generally accepted definition. The basic characteristics of the agent comprise sociality, autonomy, reactivity and initiative; and the physical structure of the agent comprises an information processing module, an environment perception module, an execution module and the like, information from upper and lower layers is received and analyzed through a self-system, and an optimal processing strategy is computed according to a set rule. Therefore, introduction of multi-agent promotes electric power consumer to participate in power grid peak regulation, reduces the safe operation pressure of power grids, balances the load of the power grids and guides the consumers to utilize electricity scientifically and reasonably; and on the other hand, optimal allocation of electric power resources and social resources can also be realized, and sustainable development of the electric power industry can be promoted. With large-scale access of new energy generation resources and flexible load into the power grid, the power grid's regulating and controlling capacity is improved.

Present distributed control generally aims at single category of distributed power supply or load and the like, and synergistic regulation and control of controllable load and the distributed power supply is less considered. Even the distributed regulation and control of the power supply and load is less considered, generally a completely-distributed computing framework is used, and implementing feasibility based on actual technological means of edge computing and the like is not considered.

Document CN108599270 A discloses a method for power system wide-area coordination, which eliminates the wind power randomness. The method involves decoupling between multiple independent regions through a multi-zone interconnected power grid. A centralized dynamic economic dispatch model is established under a wind power randomness predicted scene. The centralized dynamic economic dispatch model is divided into area optimization sub-problem and total coordination main problem. Wind power error scene is introduced on the established random dynamic economic dispatch model. A thermal power generator output upper limit constraint is predicted. A corner value of each boundary node is determined by solving full net dispersion optimization problem and area random optimization problem.

US2016179077 A1 discloses a power flow control system and method for interconnected power and transportation system in electrical power networks. The system has an abstract framework unit configured to work as a utility maximiser under constraints. A set of agents is responsible for a set of electrical subsystems. The abstract framework unit expresses internal state of the electrical sub-system within a common system of coordinates. A communication unit communicates among the agents according to a protocol. The abstract framework unit enables composition of a set of inter-connected electrical subsystems into a sub-system for which another internal state is communicated with another set of agents according to the protocol. The system and method maximizes integration of renewables and minimizes non-renewable power plants need for guarantee adequate reserve margins.

SUMMARY OF THE INVENTION

The invention aims to solve the technical problem of providing a multi-agent load regulating and controlling method based on edge computing to realize load balance of the whole electric power system aiming at defects existing in the prior art by providing a multi-agent load regulating and controlling method based on edge computing with the technical features of independent method claim 1. Alternative embodiments are defined in the dependent claims. Such a method comprises the following steps:

> step 1: dividing power grid in a region into regional power grids which are connected mutually according to electric power nodes near a transformer substation by using the transformer substation as a center, and building electric power node data models within the regional power grids without considering network losses in the region,
wherein the electric power nodes are various electric equipment and generation equipment, the built electric power node data models within the regional power grids comprise the thermal power generation data model, the wind power generation mathematical model, the photovoltaic system generation mathematical model and the flexible load mathematical model, and the specific constructing method comprises the steps:

(a) building the thermal power generation mathematical model:
in order to guarantee the reliability and flexibility of the power grid, the thermal power generation data model comprises generation cost and operation constraints of thermal power generator, and the generation cost function of the thermal power generator is shown as the following formula:

$$C_k^G(P_k^G) = a_k^G(P_k^G)^2 + b_k^G P_k^G + c_k^G \qquad (1)$$

wherein, $C_k^G()$ is the generation cost of the $k$th thermal power generator set, $P_k^G$ is active power generated in the region of the $k$th thermal power generator set, $a_k^G$, $b_k^G$ and $c_k^G$ are thermal power generation cost coefficients of the $k$th thermal power generator set,
and the active power generated in the region of the thermal power generator set is limited by the following factors:

$$P_{k-\min}^G \leq P_k^G \leq P_{k-\max}^G \qquad (2)$$

thereinto, $P_{k-\min}^G$ and $P_{k-\max}^G$ are respectively the upper limit and the lower limit of thermal power output of the thermal power generator set;

(b) building the wind power generation mathematical model:
setting a generation model of the wind power generator according to wind power generation's characteristics, considering the characteristics of the power output curve of wind power generation, enabling the generation power of a single wind power generator to be expressed as a piecewise function, as shown in the following formula:

$$P_n^W(V_n^W) = \begin{cases} 0 & ,0 \leq V_n^W < v_{n-ci}^W \\ a_n^W + b_n^W V_n^W & ,v_{n-ci}^W \leq V_n^W < v_{n-cr}^W \\ P_R^W & ,v_{n-cr}^W \leq V_n^W < v_{n-co}^W \\ 0 & ,v_{n-co}^W \leq V_n^W \end{cases} \qquad (3)$$

wherein $P_n^W$ is the generation power of the nth wind power generator, $V_n^W$ is the wind speed of the nth wind power generator, $v_{n-ci}^W$ is the minimum wind speed capable of driving the nth wind power generator to work, $v_{n-cr}^W$ is the rated wind speed of the $n$th wind power generator operating when reaching rated power, $v_{n-co}^W$ is the maximum wind speed namely cut-out wind speed when the wind power generator is closed due to too large wind speed, $P_R^W$ is the rated active power of the $n$th wind power generator; different types of wind power generators show different ascent functions at the power ascent stage of power output curve, $a_n^W$ and $b_n^W$ are respectively constants influencing the curve shape of the function as shown in the following formula:

$$a_n^{\mathrm{W}} = \frac{P_n^{\mathrm{W}} v_{n-ci}^{\mathrm{W}}}{v_{n-ci}^{\mathrm{W}} - v_{n-cr}^{\mathrm{W}}}, \quad b_n^{\mathrm{W}} = \frac{P_n^{\mathrm{W}}}{v_{n-cr}^{\mathrm{W}} - v_{n-ci}^{\mathrm{W}}} \tag{4}$$

on the basis of solving the generation power $P_n^{\mathrm{W}}$ of the single wind power generator, the total power $P^{\mathrm{W}}$ of the wind power generation system consisting of $M^{\mathrm{W}}$ wind power generators is:

$$P^{\mathrm{W}}(V^W) = \eta_t^{\mathrm{W}} \sum_{n=1}^{M^{\mathrm{W}}} \eta_n^{\mathrm{W}} P_n^{\mathrm{W}}(V_n^{\mathrm{W}}) \tag{5}$$

wherein, $\eta_n^{\mathrm{W}}$ is wind energy conversion efficiency of the single wind power generator, and $\eta_t^{\mathrm{W}}$ is the disturbance coefficient between the wind power generators in the wind power generation system and is set according to actual situation of the wind field;

(c) building the photovoltaic system generation mathematical model:

the magnitude of generation of the photovoltaic system is relevant to the illumination intensity and illumination area of photovoltaic plates, so that the total generation power $P^{\mathrm{PV}}$ of the photovoltaic system is shown as the following formula:

$$P^{\mathrm{PV}}(r_{solar}) = r_{solar} S^{\mathrm{PV}} \eta^{\mathrm{PV}} \tag{6}$$

wherein, $r_{solar}$ is solar irradiation quantity, $S^{\mathrm{PV}}$ is the total areas of photovoltaic panels in the photovoltaic system, $\eta^{\mathrm{PV}}$ is the efficiency of the photovoltaic system,

$M^{\mathrm{PV}}$ photovoltaic panels are arranged in the photovoltaic system in total, then the total area of the photovoltaic panels in the photovoltaic system is shown as the following formula:

$$S^{\mathrm{PV}} = \sum_{m=1}^{M^{\mathrm{PV}}} S_m \tag{7}$$

wherein $S_m$ is the area of a single photovoltaic panel;

the efficiency $\eta^{\mathrm{PV}}$ of the photovoltaic system is jointly determined by the efficiency $\eta^{\mathrm{PE}}$ of the photovoltaic panels, power regulating efficiency $\eta^{\mathrm{PC}}$ and packing factor $A^{\mathrm{PV}}$, as shown in the following formula:

$$\eta^{\mathrm{PV}} = \eta^{\mathrm{PE}} \eta^{\mathrm{PC}} A^{\mathrm{PV}} \tag{8}$$

from the formula (3) and the formula (6), the power output of the wind power generators and the power output of the photovoltaic generation system are not adjustable, so that decision variables are not referred to; and $P^{\mathrm{W}}$ and $P^{\mathrm{PV}}$ are respectively used for expressing total power of regional power grids charged by the wind power generators and the photovoltaic generation system;

(d) building the flexible load mathematical model;

flexible load has adjustability relative to electrovalence, $P_l^{\mathrm{DR}}$ is set to express reduced active power of $l$th flexible load due to demand response, therefore, caused economic losses are set to be $C_l^{\mathrm{DR}}(P_l^{\mathrm{DR}})$, the specific formula is shown as follows:

$$C_l^{\mathrm{DR}}(P_l^{\mathrm{DR}}) = a_l^{\mathrm{DR}}(P_l^{\mathrm{DR}})^2 + b_l^{\mathrm{DR}} P_l^{\mathrm{DR}} + c_l^{\mathrm{DR}} \tag{9}$$

wherein $a_l^{\mathrm{DR}}$, $b_l^{\mathrm{DR}}$ and $c_l^{\mathrm{DR}}$ are respectively cost coefficients,
and demand for active power of the flexible load in the region of the power grid is limited by the following factors:

$$0 \le P_l^{\mathrm{DR}} \le P_{l-\max}^{\mathrm{DR}} \tag{10}$$

wherein $P_{l-\max}^{\mathrm{DR}}$ is the maximum value constrain of active power of the flexible load;

step 2: assuming that a physical tie-line exists between every two regional power grids, at the time, setting admittance of the tie-line, considering coupling relationship between the regional power grids, building the perception model based on edge computing, intelligently perceiving the voltage and the phase angle of two ends of the tie-line; computing line loss between the regional power grids, superimposing generation power and consumption power in the regional power grids to obtain net active power of the regional power grids; and at the same time, computing the line loss of the regional power grids in a certain range to enable the net active power of the regional power grids to reach power balance;

setting a tie-line $(i, j)$ between the regional power grids and it's admittance is $y_{i,j}$ enabling the regional power grid $i$ to be connected with the regional power grid $j$; for local voltage $V_j$ and phase position $\theta_j$ of a connecting point of the given regional power grid $j$, transmitting active power $P_{i,j}$ on the connecting point of the regional power grid $i$ through the tie-line $(i, j)$, as shown in the following formula:

$$P_{i,j} = V_i^2 \mathrm{Re}(y_{i,j}) - V_i \tilde{V}_j (\mathrm{Re}(y_{i,j})\cos(\theta_i - \tilde{\theta}_j) + \mathrm{Im}(y_{i,j})\sin(\theta_i - \tilde{\theta}_j)) \tag{11}$$

wherein $V_i$ and $\theta_i$ are respectively the local voltage and the phase position of the connecting point of the regional power grid $i$, $\tilde{V}_i$ and $\tilde{\theta}_i$ as well as $\tilde{V}_j$ and $\tilde{\theta}_j$ are respectively the voltage and the phase position of a coupling region, perceived by the connecting points of the regional power grid $i$ and the regional power grid $j$ through edge computing, and meet the following equality constraint:

$$\begin{bmatrix} V_i \\ \theta_i \end{bmatrix} = \begin{bmatrix} \tilde{V}_i \\ \tilde{\theta}_j \end{bmatrix}, \begin{bmatrix} V_j \\ \theta_j \end{bmatrix} = \begin{bmatrix} \tilde{V}_i \\ \tilde{\theta}_j \end{bmatrix} \tag{12}$$

using $v_{(\cdot)}$ and $\tilde{v}_{(\cdot)}$ for respectively expressing vector $[V_{(\cdot)}, \theta_{(\cdot)}]^T$ and $[\tilde{V}_{(\cdot)}, \tilde{\theta}_{(\cdot)}]^T$, wherein ( ∎ ) expresses a symbol $i$ or $j$;
if $V_i = \tilde{V}_j$ and $\theta_i = \tilde{\theta}_j$, $P_{i,j} = 0$,
if the tie-line does not exist in the regional power grid $i$ and the regional power grid $j$, $y_{i,j} = 0$, and $P_{i,j} = 0$, meanwhile, obtaining power grid's power balance relationship in the region according to the electric power node data model in the regional power grids built in step 1 and the line loss intelligently perceived by tie-line between regions, and in order to guarantee safe and reliable operation of the power grid, building a mathematical model of net active power charged into by busbar of the regional power grid i, as shown in the following formula:

$$P_i = \sum_{k \in \kappa_i^{\mathrm{G}}} P_{i,k}^{\mathrm{G}} + \sum_{l \in \kappa_i^{\mathrm{DR}}} P_{i,l}^{\mathrm{DR}} + P_i^{\mathrm{W}} + P_i^{\mathrm{PV}} - P_i^{\mathrm{D}} - \sum_{(i,j) \in T_i} P_{i,j} \tag{13}$$

wherein $\kappa_i^{\mathrm{G}}$ and $\kappa_i^{\mathrm{DR}}$ respectively express thermal power generation device and flexible load device in the regional power grid $i$; assuming that $T = \{\forall(i,j)|\forall i,j \in M, i \neq j\}$ expresses a tie-line set between all the regional power grids, wherein all the internetwork tie-lines $T_i$ connected with the regional power grid $i$ are

defined as $T_i = \{\forall(i, j)|\forall j \in M, i \neq j\}$, $M$ is a set of all the regional power grids in the region, and $P_i^{\mathrm{D}}$ is demand power of rigid load in the regional power grid $i$;

wholly dividing multiple regional power grids in a certain range into interval power grids, enabling tie-lines and network loss to exist in different interval power grids as well, assuming that all the interval power grids are wholly connected, i.e., no independent interval power grid exists, and all the interval power grids form the whole power grid system, so building the model for balancing the line loss of the interval power grids and the power of the system, as shown in the formula:

$$P_{s,t} = V_s^2 \operatorname{Re}(y_{s,t}) - V_s V_t (\operatorname{Re}(y_{s,t}) \cos(\theta_s - \theta_t) + \operatorname{Im}(y_{s,t}) \sin(\theta_s - \theta_t)) \qquad (14a)$$

$$\sum_{s \in R} \sum_{i \in s} P_i + \sum_{(s,t) \in R_s} P_{s,t} = 0 \qquad (14b)$$

wherein $P_{s,t}$ is the line loss of the tie-line between the interval power grid s and the interval power grid t, while $V_s$ and $V_t$ as well as $\theta_s$ and $\theta_t$ are respectively the voltages and the phase angles of two ends of the tie-line between two interval power grids, and $y_{s,t}$ is the admittance of the interval tie-line;

step 3: regarding a single regional power grid as an agent, assuming that the maximum economic benefit scheme in the regional power grids only considers thermal power generation cost and demand response cost, to set the object function of the regional power grid; deducing the optimal object function of economic benefits of interval power grids according to the object function of the regional power grids, and setting relevant equality constraints and inequality constraints;

only considering the total cost namely the generation cost and the demand response cost of the regional power grid $i$, building an object function considering economic benefits, as shown in the following formula:

$$C_i = \sum_{k \in \kappa_i^{\mathrm{G}}} C_k^{\mathrm{G}}(P_k^{\mathrm{G}}) + \sum_{k \in \kappa_i^{\mathrm{DR}}} C_k^{\mathrm{DR}}(P_k^{\mathrm{DR}}) \qquad (15)$$

considering the constraint problem, and expressing the optimal problem of economic benefits of the regional power grid $i$ as:

$$\min_{x_i} \quad C_i(x_i) \qquad (16a)$$

$$\text{s. t.} \quad h_i(x_i) \le 0, \quad \forall(i, j) \in T_i \qquad (16b)$$

in the formula (16b), defining decision variable $x_i$ as $x_i = \left\{ P_k^{\mathrm{G}}, P_l^{\mathrm{DR}}, V_i, \theta_i, \tilde{\mathrm{V}}_j, \tilde{\theta}_j \middle| k \in \kappa_i^{\mathrm{G}}, l \in \kappa_i^{\mathrm{DR}} \right\}$, wherein $h_i(x_i)$, expresses the vector value of the constraint and comprises constraint of the volume of generator in the regional power grid $i$ as shown in the formula (2), constraint of the volume of demand response as shown in the formula (10), constraint of interchange power of the tie-line as shown in the formula (11), and power balance constraints as shown in the formula (13) and the formula (14);

so considering multi interconnection regional power grids, the optimal problem of interval power grids' economic benefits is modeled as:

$$\min_{x_i, i \in M} \quad \sum_{i \in M} C_i(x_i) \qquad (17a)$$

s. t. $h_i(x_i) \le 0, \quad \forall i \in M$

$$v_i - \tilde{v}_i = 0, \quad \forall(i,j) \in T \tag{17b}$$

wherein the formula (17b) describes that the coupling variable $\tilde{v}_i = [\tilde{V}_i, \tilde{\theta}_i]^T$ between lines is regarded as interface or service which is provided by the regional power grid $i$ for all the regions connected with the regional power grid $i$ due to the existence of the tie-line $(i, j)$; and

step 4: extracting economic benefit terms and electric power balance terms as objects according to the economic benefit optimal object function of the interval power grids, setting coupling of port voltages and phase angles between regions as constraint terms;converting the economy optimization and load regulation problem of the interval power grids into the problem of balancing and coupling of whole economic benefits of the distributed regional power grids and power between regions; setting an augmented Lagrange matrix, converting the object function and constraints into a twice differentiable strong convex function, and solving the function using the ADMM algorithm to achieve regulation and control of load of the power grid system; converting the economic benefit optimal object function of the interval power grids into the augmented Lagrange matrix, and firstly rewriting $C_i$ into the following expanded form:

$$\overline{C}_i(x_i) = \begin{cases} C_i(x_i), & h_i(x_i) \le 0 \\ \infty, & h_i(x_i) > 0 \end{cases} \tag{18}$$

to separate the minimum object with the tie-line constraint condition, defining constraint index for the object function, as shown in the formula:

$$I(x) = \begin{cases} 0, & x = 0 \\ \infty, & x \ne 0 \end{cases} \tag{19}$$

enabling the formula (17) to be equivalent to:

$$\min \sum_{i \in M} \overline{C}_i(x_i) + \sum_{(i,j) \in T} I\left(v_i - \tilde{v}_i\right) \tag{20}$$

by introducing auxiliary variables $v_i^c = \left[V_i^c, \theta_i^c\right]^T$ and $\tilde{v}_i^c = \left[\tilde{V}_i^c, \tilde{\theta}_i^c\right]^T$ representing all connecting lines $(i, j) \in T$ connected with the regional power grid $i$, rewriting the formula (20) as:

$$\min \sum_{i \in M} \overline{C}_i(x_i) + \sum_{(i,j) \in T} I\left(v_i^c - \tilde{v}_i^c\right) \tag{21a}$$

s. t. $v_i - \tilde{v}_i^c = 0, \quad \forall(i,j) \in T$

$$\tilde{v}_i - v_i^c = 0, \quad \forall(i,j) \in T \tag{21b}$$

wherein two terms of the object function (21a) are separated with the constraint condition, and further an augmented Lagrange function is constructed, as shown in the following formula:

$$L_\rho\left(x, v^c, \tilde{v}^c, \lambda\right) = \sum_{(i,j)\in T} I\left(v_i^c - \tilde{v}_i^c\right) + \sum_{i\in M}\left(\overline{C}_i\left(x_i\right)\right.$$

$$\left. + \lambda_i^T \begin{bmatrix} v_i - \tilde{v}_i^c \\ \tilde{v}_j - v_j^c \end{bmatrix}_{T_i} + \frac{\rho}{2} \begin{bmatrix} v_i - \tilde{v}_i^c \\ \tilde{v}_j - v_j^c \end{bmatrix}_{T_i}^T \begin{bmatrix} v_i - \tilde{v}_i^c \\ \tilde{v}_j - v_j^c \end{bmatrix}_{T_i} \right)$$

$$(22)$$

defining $x=[x_1,\ldots, x_M]^T$ as a control variable, and $\lambda_i^T$ as theLagrange coefficient representing voltage differences between the outside connecting line of the regional power grid $i$, so that $\begin{bmatrix} v_i - \tilde{v}_i^c \\ \tilde{v}_j - v_j^c \end{bmatrix}_{T_i}$ is defined as $\mathrm{diag}\left\{v_i - \tilde{v}_i^c, \tilde{v}_j - v_j^c \middle| (i,j)\in T_i\right\}\cdot 1$, and $\rho$ is the penalty factor of the augmented Lagrange multiplier, $\rho > 0$.

Solving the augmented Lagrange function by using the alternating direction method of multipliers (ADMM), to realize the regulation and control of load of the power grid system.

The method disclosed by the invention has the basic thinking: a power supply region of the transformer substation of 110kV or 66kV is regarded as a relatively independent region; edge computing nodes namely data agency nodes are built based on the transformer substation in the region; and the edge computing nodes initiatively perceive various multidimensional data of electric data, traffic data, meteorological data, pluripotent stream data and the like in the power supply region, and by computing the demand response of the load, perform real-time accurate regulation and control on nodes of energy storage, new energy resource generation, flexible load and the like, to achieve the power energy balance in the region. Meanwhile, a single region is regarded as an agent, edge isolation is realized between multiple agents, only power energy can be transmitted, and the voltages and the phase angles of the tie-lines between the regions can be perceived. The load balance of the whole system is realized through power energy transmission between the regions.

The technical solution has the beneficial effects that by the multi-agent load regulating and controlling method based on edge computing provided by the invention, the whole power grid is divided into a multi-layer distributed network structure by using the transformer substation as node, concepts of the regional and interval power grid are proposed, the object function having optimal economic benefits is set for the regional power grid, and the power interchange in the intervals is balance constraint. Edge computing namely decentralization computing is realized through the idea of the multiple agents, i.e., whole region optimization is achieved under the condition of realizing balance of interval power according to coupling data of connecting lines.At the same time, an augmented Lagrange multiplier method is used, the object function and constraint conditions are converted into secondary strong convex matrix function, so that solution can be performed by the alternating direction method of multipliers (ADMM), and the convergence of the algorithm does not need to be verified. At the same time, the method disclosed by the invention considers thermal power generation operation cost and demand response of flexible load of a node region, and regulation and control are performed through regulating the generation quantity and setting a coordinating manner of electrovalence motivation and compensation in a certain extent. Therefore, when the object function is set, the economic cost at this time needs to be considered, so that the load in the node region of the system quickly achieves balance. A cooperative control strategy based on a demand side load system is adopted to solve the problem of new energy resources'assimilation and load balance in the power supply region of the transformer substation, and realize economic optimization of power grids in all regions and power balance between the regions.

BRIEF DESCRIPTION OF DRAWINGS

FIG. 1 shows a flow charge of the multi-agent load regulating and controlling method based on edge computing provided by embodiments of the invention; and
FIG. 2 shows a coupling relationship chart of tie-lines between regional power grids provided by the embodiments of the invention.

## DETAILED DESCRIPTION OF THE PREFERRED EMBODIMENT

The specific implementations of the invention are described in more detail below with reference to the accompanying drawings and embodiments. The following embodiments are intended to illustrate the invention, rather than to limit the scope of the invention.

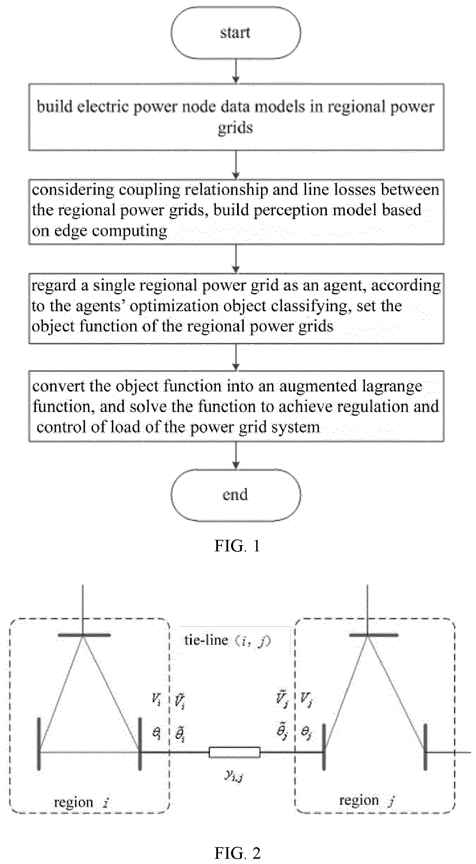

A multi-agent load regulating and controlling method based on edge computing as shown in FIG. 1 comprises the following steps:

step 1: dividing power grid in a region into regional power grids which are connected mutually according to electric power nodes near a transformer substation by using the transformer substation of 110kV or 66kV as a center, and building electric power node data models within the regional power grids without considering network losses in the region,

wherein the electric power nodes are various electric equipment and generation equipment, the built electric power node data models within the regional power grids comprise the thermal power generation data model, the wind power generation mathematical model, the photovoltaic system generation mathematical model and the flexible load mathematical model, and the specific constructing method comprises the steps:

(a) building the thermal power generation mathematical model:

in order to guarantee the reliability and flexibility of the power grid, the thermal power generation data model comprises generation cost and operation constraints of the thermal power generator, and the generation cost function of the thermal power generator is shown as the following formula:

$$C_k^{\mathrm{G}}(P_k^{\mathrm{G}}) = a_k^{\mathrm{G}}(P_k^{\mathrm{G}})^2 + b_k^{\mathrm{G}} P_k^{\mathrm{G}} + c_k^{\mathrm{G}} \qquad (1)$$

wherein, $C_k^{\mathrm{G}}()$ is the generation cost of the $k$th thermal power generator set, $P_k^{\mathrm{G}}$ is active power generated in the region of the $k$th thermal power generator set, $a_k^{\mathrm{G}}$, $b_k^{\mathrm{G}}$ and $c_k^{\mathrm{G}}$ are thermal power generation cost coefficients of the $k$th thermal power generator set;

and the active power generated in the region of the thermal power generator set is limited by the following factors:

$$P_{k-\mathrm{min}}^{\mathrm{G}} \leq P_k^{\mathrm{G}} \leq P_{k-\mathrm{max}}^{\mathrm{G}} \qquad (2)$$

thereinto, $P_{k-\mathrm{min}}^{\mathrm{G}}$ and $P_{k-\mathrm{max}}^{\mathrm{G}}$ are respectively the upper limit and the lower limit of thermal power output of the thermal power generator set;

(b) building the wind power generation mathematical model:

setting a generation model of the wind power generator according to wind power generation's characteristics, considering the characteristics of the power output curve of wind power generation, enabling the generation power of a single wind power generator to be expressed as a piecewise function, as shown in the following formula:

$$P_n^{\mathrm{W}}(V_n^{\mathrm{W}}) = \begin{cases} 0 & ,0 \leq V_n^{\mathrm{W}} < v_{n-ci}^{\mathrm{W}} \\ a_n^{\mathrm{W}} + b_n^{\mathrm{W}} V_n^{\mathrm{W}} & ,v_{n-ci}^{\mathrm{W}} \leq V_n^{\mathrm{W}} < v_{n-cr}^{\mathrm{W}} \\ P_R^{\mathrm{W}} & ,v_{n-cr}^{\mathrm{W}} \leq V_n^{\mathrm{W}} < v_{n-co}^{\mathrm{W}} \\ 0 & ,v_{n-co}^{\mathrm{W}} \leq V_n^{\mathrm{W}} \end{cases} \qquad (3)$$

Wherein, $P_n^{\mathrm{W}}$ is the generation power of the $n$th wind power generator, $V_n^{\mathrm{W}}$ is the wind speed of the $n$th wind power generator, $v_{n-ci}^{\mathrm{W}}$ is the minimum wind speed capable of driving the $n$th wind power generator to work, $v_{n-cr}^{\mathrm{W}}$ is the rated wind speed of the $n$th wind power generator operating when reaching rated power, $v_{n-co}^{\mathrm{W}}$ is the maximum wind speed namely cut-out wind speed when the wind power generator is closed due to too large wind speed, $P_R^{\mathrm{W}}$ is the rated active power of the $n$th wind power generator; different types of wind power generators show different ascent functions at the power ascent stage of power output curve, $a_n^{\mathrm{W}}$ and $b_n^{\mathrm{W}}$ are respectively constants influencing the curve shape of the function as shown in the following formula:

$$a_n^{\mathrm{W}} = \frac{P_n^{\mathrm{W}} v_{n-ci}^{\mathrm{W}}}{v_{n-ci}^{\mathrm{W}} - v_{n-cr}^{\mathrm{W}}}, \quad b_n^{\mathrm{W}} = \frac{P_n^{\mathrm{W}}}{v_{n-cr}^{\mathrm{W}} - v_{n-ci}^{\mathrm{W}}} \qquad (4)$$

on the basis of solving the generation power $P_n^{\mathrm{W}}$ of the single wind power generator, the total power $P^{\mathrm{W}}$ of the wind power generation system consisting of $M^{\mathrm{W}}$ wind power generators is:

$$P^{\mathrm{W}}(V^W) = \eta_t^{\mathrm{W}} \sum_{n=1}^{M^{\mathrm{W}}} \eta_n^{\mathrm{W}} P_n^{\mathrm{W}}(V_n^{\mathrm{W}}) \qquad (5)$$

w

wherein $\eta_n^{\mathrm{W}}$ is wind energy conversion efficiency of the single wind power generator, and $\eta_t^{\mathrm{W}}$ is the disturbance coefficient between the wind power generators in the wind power generation system and is set according to the actual situation of the wind field;

(c) building the photovoltaic system generation mathematical model:

the magnitude of generation of the photovoltaic system is relevant to the illumination intensity and illumination area of photovoltaic plates, so that the total generation power $P^{\mathrm{PV}}$ of the photovoltaic system is shown as the following formula:

$$P^{\mathrm{PV}}(r_{solar}) = r_{solar} S^{\mathrm{PV}} \eta^{\mathrm{PV}} \qquad (6)$$

Wherein, $r_{solar}$ is solar irradiation quantity (KW/m$^2$), $S^{\mathrm{PV}}$ is the total areas of photovoltaic panels in the photovoltaic system, $\eta^{\mathrm{PV}}$ is the efficiency of the photovoltaic system,
$M^{\mathrm{PV}}$ photovoltaic panels are arranged in the photovoltaic system in total, then the total area of the photovoltaic panels in the photovoltaic system is shown as the following formula:

$$S^{\mathrm{PV}} = \sum_{m=1}^{M^{\mathrm{PV}}} S_m \qquad (7)$$

wherein $S_m$ is the area of a single photovoltaic panel;
the efficiency $\eta^{\mathrm{PV}}$ of the photovoltaic system is jointly determined by the efficiency $\eta^{\mathrm{PE}}$ of the photovoltaic panels, power regulating efficiency $\eta^{\mathrm{PC}}$ and packing factor $A^{\mathrm{PV}}$, as shown in the following formula:

$$\eta^{\mathrm{PV}} = \eta^{\mathrm{PE}} \eta^{\mathrm{PC}} A^{\mathrm{PV}} \tag{8}$$

from the formula (3) and the formula (6), the power output of the wind power generators and the power output of the photovoltaic generation system are not adjustable, so that decision variables are not referred to; and $P^{\mathrm{W}}$ and $P^{\mathrm{PV}}$ are respectively used for expressing total power of regional power grids charged by the wind power generators and the photovoltaic generation system;

(d) building the flexible load mathematical model;

defining the demand power of rigid load as $P^{\mathrm{D}}$ without too much consideration. Flexible load has adjustability relative to electrovalence, $P_l^{\mathrm{DR}}$ is set to express reduced active power of $l$th flexible load due to demand response, therefore, caused economic losses are set to be $C_l^{\mathrm{DR}}(P_l^{\mathrm{DR}})$, the specific formula is shown as follows:

$$C_l^{\mathrm{DR}}(P_l^{\mathrm{DR}}) = a_l^{\mathrm{DR}}(P_l^{\mathrm{DR}})^2 + b_l^{\mathrm{DR}} P_l^{\mathrm{DR}} + c_l^{\mathrm{DR}} \tag{9}$$

wherein $a_l^{\mathrm{DR}}$, $b_l^{\mathrm{DR}}$ and $c_l^{\mathrm{DR}}$ are respectively cost coefficients,
and demand for active power of the flexible load in the region of the power grid is limited by the following factors:

$$0 \le P_l^{\mathrm{DR}} \le P_{l-\max}^{\mathrm{DR}} \tag{10}$$

wherein $P_{l-\max}^{\mathrm{DR}}$ is the maximum value constrain of active power of the flexible load.

step 2: assuming that a physical tie-line exists between every two regional power grids, at the time, setting admittance of the tie-line, considering coupling relationship between the regional power grids, as shown in Fig. 2, building the perception model based on edge computing, intelligently perceiving the voltage and the phase angle of two ends of the tie-line; computing line loss between the regional power grids, superimposing generation power and consumption power in the regional power grids to obtain net active power of the regional power grids; and at the same time, computing the line loss of the regional power grids in a certain range to enable the net active power of the regional power grids to reach power balance;
setting a tie-line $(i, j)$ between the regional power grids and it's admittance is $y_{i,j}$, enabling the regional power grid $i$ to be connected with the regional power grid $j$; for local voltage $V_j$ and phase position $\theta_j$ of a connecting point of the given regional power grid $j$, transmitting active power $P_{i,j}$ on the connecting point of the regional power grid $i$ through the tie-line $(i, j)$, as shown in the following formula:

$$P_{i,j} = V_i^2 \mathrm{Re}(y_{i,j}) - V_i \tilde{V}_j (\mathrm{Re}(y_{i,j})\cos(\theta_i - \tilde{\theta}_j) + \mathrm{Im}(y_{i,j})\sin(\theta_i - \tilde{\theta}_j)) \tag{11}$$

wherein $V_i$ and $\theta_i$ are respectively the local voltage and the phase position of the connecting point of the regional power grid $i$, $\tilde{V}_i$ and $\tilde{\theta}_i$ as well as $\tilde{V}_j$ and $\tilde{\theta}_j$ are respectively the voltage and the phase position of a coupling region, perceived by the connecting points of the regional power grid $i$ and the regional power grid $j$ through edge computing, and meet the following equality constraint:

$$\begin{bmatrix} V_i \\ \theta_i \end{bmatrix} = \begin{bmatrix} \tilde{V}_i \\ \tilde{\theta}_j \end{bmatrix}, \begin{bmatrix} V_j \\ \theta_j \end{bmatrix} = \begin{bmatrix} \tilde{V}_i \\ \tilde{\theta}_j \end{bmatrix} \tag{12}$$

to compute conveniently, using $v_{(\cdot)}$ and $\tilde{v}_{(\cdot)}$ for respectively expressing vector $[V_{(\cdot)}, \theta_{(\cdot)}]^T$ and $[\tilde{V}_{(\cdot)}, \tilde{\theta}_{(\cdot)}]^T$,

wherein (·) expresses a symbol $i$ or $j$;

if $V_i = \tilde{V}_j$ and $\theta_i = \tilde{\theta}_j$, $P_{i,j} = 0$,

if the tie-line does not exist in the regional power grid $i$ and the regional power grid $j$, $y_{i,j} = 0$, and $P_{i,j} = 0$; meanwhile, obtaining power grid's power balance relationship in the region according to the electric power node data model in the regional power grids built in step 1 and the line loss intelligently perceived by tie-line between regions, and in order to guarantee safe and reliable operation of the power grid, building a mathematical model of net active power charged into by busbar of the regional power grid i, as shown in the following formula:

$$P_i = \sum_{k \in \kappa_i^{\mathrm{G}}} P_{i,k}^{\mathrm{G}} + \sum_{l \in \kappa_i^{\mathrm{DR}}} P_{i,l}^{\mathrm{DR}} + P_i^{\mathrm{W}} + P_i^{\mathrm{PV}} - P_i^{\mathrm{D}} - \sum_{(i,j) \in T_i} P_{i,j} \tag{13}$$

wherein $\kappa_i^{\mathrm{G}}$ and $\kappa_i^{\mathrm{DR}}$ respectively express thermal power generation device and flexible load device in the regional power grid $i$; assuming that $T = \{\forall (i,j) | \forall i, j \in M, i \neq j\}$ expresses a tie-line set between all the regional power grids, wherein all the internetwork tie-lines $T_i$ connected with the regional power grid $i$ are defined as $T_i = \{\forall (i,j) | \forall j \in M, i \neq j\}$, $M$ is a set of all the regional power grids in the region, and $P_i^{\mathrm{D}}$ is demand power of rigid load in the regional power grid $i$;

wholly dividing multiple regional power grids in a certain range into interval power grids, enabling tie-lines and network loss to exist in different interval power grids as well, assuming that all the interval power grids are wholly connected, i.e., no independent interval power grid exists, and all the interval power grids form the whole power grid system, so building the model for balancing the line loss of the interval power grids and the power of the system, as shown in the formula:

$$P_{s,t} = V_s^2 \operatorname{Re}(y_{s,t}) - V_s V_t (\operatorname{Re}(y_{s,t}) \cos(\theta_s - \theta_t) + \operatorname{Im}(y_{s,t}) \sin(\theta_s - \theta_t)) \tag{14a}$$

$$\sum_{s \in R} \sum_{i \in s} P_i + \sum_{(s,t) \in R_s} P_{s,t} = 0 \tag{14b}$$

wherein $P_{s,t}$ is the line loss of the tie-line between the interval power grid s and the interval power grid t, while $V_s$ and $V_t$ as well as $\theta_s$ and $\theta_t$ are respectively the voltages and the phase angles of two ends of the tie-line between two interval power grids, and $y_{s,t}$ is the admittance of the interval tie-line;

step 3: regarding a single regional power grid as an agent, assuming that the maximum economic benefit scheme in the regional power grids only considers thermal power generation cost and demand response cost, to set the object function of the regional power grid; deducing the optimal object function of economic benefits of interval power grids according to the object function of the regional power grids, and setting relevant equality constraints and inequality constraints;

only considering the total cost namely the generation cost and the demand response cost of the regional power grid $i$, building an object function considering economic benefits, as shown in the following formula:

$$C_i = \sum_{k \in \kappa_i^{\mathrm{G}}} C_k^{\mathrm{G}}(P_k^{\mathrm{G}}) + \sum_{k \in \kappa_i^{\mathrm{DR}}} C_k^{\mathrm{DR}}(P_k^{\mathrm{DR}}) \tag{15}$$

considering the constraint problem, and expressing the optimal problem of economic benefits of the regional power grid $i$ as:

$$\min_{x_i} \quad C_i(x_i) \tag{16a}$$

$$\text{s. t.} \quad h_i\left(x_i\right) \le 0, \quad \forall\left(i,j\right) \in T_i \tag{16b}$$

in the formula (16b), defining decision variable $x_i$ as $x_i = \left\{P_k^{\text{G}}, P_l^{\text{DR}}, V_i, \theta_i, \tilde{V}_j, \tilde{\theta}_j \,\middle|\, k \in \kappa_i^{\text{G}}, l \in \kappa_i^{\text{DR}}\right\}$, wherein $h_i(x_i)$, expresses the vector value of the constraint and comprises constraint of the volume of generator in the regional power grid $i$ as shown in the formula (2), the constraint of the volume of demand response as shown in the formula (10), the constraint of interchange power of the tie-line as shown in the formula (11), and power balance constraints as shown in the formula (13) and the formula (14); so considering multi interconnection regional power grids, the optimal problem of interval power grids'economic benefits ismodeled as:

$$\min_{x_i, i \in M} \quad \sum_{i \in M} C_i\left(x_i\right) \tag{17a}$$

$$\text{s. t.} \quad h_i\left(x_i\right) \le 0, \quad \forall i \in M$$
$$v_i - \tilde{v}_i = 0, \quad \forall\left(i,j\right) \in T \tag{17b}$$

wherein the formula (17b) describes that the coupling variable $\tilde{v}_i = [\tilde{V}_i, \tilde{\theta}_i]^T$ between lines is regarded as interface or service which is provided by the regional power grid $i$ for all the regions connected with the regional power grid $i$due to the existence of the tie-line ($i, j$); and

step 4: extracting economic benefit terms and electric power balance terms as objects according to the economic benefit optimal object function of the interval power grids, setting coupling of port voltages and phase angles between regions as constraint terms; converting the economy optimization and load regulation problem of the interval power grids into the problem of balancing and coupling of whole economic benefits of the distributed regional power grids and power between regions; setting an augmented Lagrange matrix, converting the object function and constraints into a twice differentiable strong convex function, and solving the function using the ADMM algorithm to achieve regulation and control of load of the power grid system; to convert the object function into a differentiable equation which can be computed, converting the economic benefit optimal object function of the interval power grids into the augmented Lagrange matrix, and firstly rewriting $C_i$ into the following expanded form:

$$\overline{C}_i\left(x_i\right) = \begin{cases} C_i\left(x_i\right), & h_i\left(x_i\right) \le 0 \\ \infty, & h_i\left(x_i\right) > 0 \end{cases} \tag{18}$$

to separate the minimum object with the tie-line constraint condition, defining a constraint index for the object function, as shown in the formula:

$$I\left(x\right) = \begin{cases} 0, & x = 0 \\ \infty, & x \ne 0 \end{cases} \tag{19}$$

enabling the formula (17) to be equivalent to:

$$\min \sum_{i \in M} \overline{C}_i\left(x_i\right) + \sum_{(i,j) \in T} I\left(v_i - \tilde{v}_i\right) \tag{20}$$

by introducing auxiliary variables $v_i^c = \left[V_i^c, \theta_i^c\right]^T$ and $\tilde{v}_i^c = \left[\tilde{V}_i^c, \tilde{\theta}_i^c\right]^T$ representing all connecting lines ($i, j$) $\in T$ connected with the regional power grid i, rewriting the formula (20) as:

$$\min \sum_{i \in M} \overline{C}_i \left( x_i \right) + \sum_{(i,j) \in T} I \left( v_i^c - \tilde{v}_i^c \right) \qquad (21a)$$

$$\text{s. t.} \quad v_i - \tilde{v}_i^c = 0, \quad \forall (i,j) \in T$$
$$\tilde{v}_i - v_i^c = 0, \quad \forall (i,j) \in T \qquad (21b)$$

wherein two terms of the object function (21a) are separated with the constraint condition, and further an augmented Lagrange function is constructed, as shown in the following formula:

$$L_\rho \left( x, v^c, \tilde{v}^c, \lambda \right) = \sum_{(i,j) \in T} I \left( v_i^c - \tilde{v}_i^c \right) + \sum_{i \in M} \left( \overline{C}_i \left( x_i \right) \right.$$

$$+ \lambda_i^T \begin{bmatrix} v_i - \tilde{v}_i^c \\ \tilde{v}_j - v_j^c \end{bmatrix}_{T_i} + \frac{\rho}{2} \begin{bmatrix} v_i - \tilde{v}_i^c \\ \tilde{v}_j - v_j^c \end{bmatrix}_{T_i}^T \begin{bmatrix} v_i - \tilde{v}_i^c \\ \tilde{v}_j - v_j^c \end{bmatrix}_{T_i} \left. \right) \qquad (22)$$

defining $x=[x_1,..., x_M]^T$ as a control variable, and $\lambda_i^T$ as theLagrange coefficient representing voltage differences between the outside connecting line of the regional power grid $i$, so that $\begin{bmatrix} v_i - \tilde{v}_i^c \\ \tilde{v}_j - v_j^c \end{bmatrix}_{T_i}$ is defined

as $\text{diag}\left\{ v_i - \tilde{v}_i^c, \tilde{v}_j - v_j^c \middle| (i,j) \in T_i \right\} \cdot 1$ , and $\rho$ is the penalty factor of the augmented Lagrange multiplier, $\rho > 0$.

The changed augmented Lagrange matrix is twice strong convex constraint, it makes the converted problem can be easily solved, so solving the augmented Lagrange function by using the alternating direction method of multipliers (ADMM), to realize the regulation and control of load of the power grid system, and the algorithm must be convergence.

Finally, it should be noted that the above embodiments are merely intended to describe the technical solutions of the invention, rather than to limit the invention. Although the invention is described in detail with reference to the above embodiments, persons of ordinary skill in the art should understand that they may still make modifications to the technical solutions described in the above embodiments or make equivalent replacements to some or all technical features, and thereof, without enabling the essence of the technical solutions to depart from the scope defined by the claims of the invention.

## Claims

1.   A multi-agent load regulating and controlling method based on edge computing, **characterized by** comprising the following steps:

step 1: dividing the power grid in a region into regional power grids which are connected mutually according to electric power nodes near a transformer substation by using the transformer substation as a center, and building electric power node data models within the regional power grids without considering network losses in the region, wherein the electric power nodes are various electric equipment and generation equipment, the built electric power node data models within the regional power grids comprise the thermal power generation data model, the wind power generation mathematical model, the photovoltaic system generation mathematical model and the flexible load mathematical model;

step 2: assuming that a physical tie-line exists between every two regional power grids, at the time, setting admittance of the tie-line, considering coupling relationship between the regional power grids, building the perception model based on edge computing, intelligently perceiving the voltage and the phase angle of two ends of the tie-line; computing line loss between the regional power grids, superimposing generation power and consumption power in the regional power grids to obtain net active power of the regional power grids; and at the same time, computing the line loss of the regional power grids in a certain range to enable the net active power of the regional power grids to reach power balance;

step 3: regarding a single regional power grid as an agent, assuming that the maximum economic benefit scheme in the regional power grids only considers thermal power generation cost and demand response cost, to set the object function of the regional power grid; deducing the optimal object function of economic benefits of interval power grids according to the object function of the regional power grids, and setting relevant equality constraints and inequality constraints;

step 4: extracting economic benefit terms and electric power balance terms as objects according to the economic benefit optimal object function of the interval power grids, setting coupling of port voltages and phase angles between regions as constraint terms; converting the economy optimization and load regulation problem of the interval power grids into the problem of balancing and coupling of whole economic benefits of the distributed regional power grids and power between regions; setting an augmented Lagrange matrix, converting the object function and constraints into a twice differentiable strong convex function, and solving the function by using the alternating direction method of multipliers (ADMM) algorithm to achieve regulation and control of load of the power grid system.

2.  The multi-agent load regulating and controlling method based on edge computing according to claim 1, **characterized in that** the specific method for building an electric power node data model within the regional power grids in step 1 comprises the steps:

(a) building the thermal power generation mathematical model:

in order to guarantee the reliability and flexibility of the power grid, the thermal power generation data model comprises generation cost and operation constraints of thermal power generator, and the generation cost function of the thermal power generator is shown as the following formula:

$$C_k^{\mathrm{G}}(P_k^{\mathrm{G}}) = a_k^{\mathrm{G}}(P_k^{\mathrm{G}})^2 + b_k^{\mathrm{G}} P_k^{\mathrm{G}} + c_k^{\mathrm{G}} \qquad (1)$$

wherein, $C_k^{\mathrm{G}}()$ is the generation cost of the kth thermal power generator set, $P_k^{\mathrm{G}}$ is active power generated in the region of the $k$th thermal power generator set, $a_k^{\mathrm{G}}$, $b_k^{\mathrm{G}}$ and $c_k^{\mathrm{G}}$ are thermal power generation cost coefficients of the $k$th thermal power generator set;

and the active power generated in the region of the thermal power generator set is limited by the following factors:

$$P_{k-\min}^{\mathrm{G}} \le P_k^{\mathrm{G}} \le P_{k-\max}^{\mathrm{G}} \qquad (2)$$

thereinto, $P_{k-\min}^{\mathrm{G}}$ and $P_{k-\max}^{\mathrm{G}}$ are respectively the upper limit and the lower limit of thermal power output of the thermal power generator set;

(b) building the wind power generation mathematical model:

setting a generation model of the wind power generator according to wind power generation's characteristics, considering the characteristics of the power output curve of wind power generation, enabling the generation power of a single wind power generator to be expressed as a piecewise function, as shown in the following formula:

$$P_n^{\mathrm{W}}(V_n^{\mathrm{W}}) = \begin{cases} 0 & ,0 \le V_n^{\mathrm{W}} < v_{n-ci}^{\mathrm{W}} \\ a_n^{\mathrm{W}} + b_n^{\mathrm{W}} V_n^{\mathrm{W}} & ,v_{n-ci}^{\mathrm{W}} \le V_n^{\mathrm{W}} < v_{n-cr}^{\mathrm{W}} \\ P_R^{\mathrm{W}} & ,v_{n-cr}^{\mathrm{W}} \le V_n^{\mathrm{W}} < v_{n-co}^{\mathrm{W}} \\ 0 & ,v_{n-co}^{\mathrm{W}} \le V_n^{\mathrm{W}} \end{cases} \tag{3}$$

wherein, $P_n^{\mathrm{W}}$ is the generation power of the nth wind power generator, $V_n^{\mathrm{W}}$ is the wind speed of the $n$th wind power generator, $v_{n-ci}^{\mathrm{W}}$ is the minimum wind speed capable of driving the $n$th wind power generator to work, $v_{n-cr}^{\mathrm{W}}$ is the rated wind speed of the $n$th wind power generator operating when reaching rated power, $v_{n-co}^{\mathrm{W}}$ is the maximum wind speed namely cut-out wind speed when the wind power generator is closed due to too large wind speed, $P_R^{\mathrm{W}}$ is the rated active power of the nth wind power generator; different types of wind power generators show different ascent functions at the power ascent stage of power output curve, $a_n^{\mathrm{W}}$ and $b_n^{\mathrm{W}}$ are respectively constants influencing the curve shape of the function as shown in the following formula:

$$a_n^{\mathrm{W}} = \frac{P_n^{\mathrm{W}} v_{n-ci}^{\mathrm{W}}}{v_{n-ci}^{\mathrm{W}} - v_{n-cr}^{\mathrm{W}}}, \quad b_n^{\mathrm{W}} = \frac{P_n^{\mathrm{W}}}{v_{n-cr}^{\mathrm{W}} - v_{n-ci}^{\mathrm{W}}} \tag{4}$$

on the basis of solving the generation power $P_n^{\mathrm{W}}$ of the single wind power generator, the total power $P^{\mathrm{W}}$ of the wind power generation system consisting of $M^{\mathrm{W}}$ wind power generators is:

$$P^{\mathrm{W}}(V^{W}) = \eta_t^{\mathrm{W}} \sum_{n=1}^{M^{\mathrm{W}}} \eta_n^{\mathrm{W}} P_n^{\mathrm{W}}(V_n^{\mathrm{W}}) \tag{5}$$

w

wherein, $\eta_n^{\mathrm{W}}$ is wind energy conversion efficiency of the single wind power generator, and $\eta_t^{\mathrm{W}}$ is the disturbance coefficient between the wind power generators in the wind power generation system and is set according to actual situation of the wind field;

(c) building the photovoltaic system generation mathematical model:

the magnitude of generation of the photovoltaic system is relevant to the illumination intensity and illumination area of photovoltaic plates, so that the total generation power $P^{\mathrm{PV}}$ of the photovoltaic system is shown as the following formula:

$$P^{\mathrm{PV}}(r_{solar}) = r_{solar} S^{\mathrm{PV}} \eta^{\mathrm{PV}} \tag{6}$$

wherein, $r_{solar}$ is solar irradiation quantity, $S^{\mathrm{PV}}$ is the total areas of photovoltaic panels in the photovoltaic system, $\eta^{\mathrm{PV}}$ is the efficiency of the photovoltaic system,
$M^{\mathrm{PV}}$ photovoltaic panels are arranged in the photovoltaic system in total, then the total area of the photovoltaic panels in the photovoltaic system is shown as the following formula:

$$S^{\mathrm{PV}} = \sum_{m=1}^{M^{\mathrm{PV}}} S_m \qquad (7)$$

wherein $S_m$ is the area of a single photovoltaic panel;
the efficiency $\eta^{\mathrm{PV}}$ of the photovoltaic system is jointly determined by the efficiency $\eta^{\mathrm{PE}}$ of the photovoltaic panels, power regulating efficiency $\eta^{\mathrm{PC}}$ and packing factor $A^{\mathrm{PV}}$, as shown in the following formula:

$$\eta^{\mathrm{PV}} = \eta^{\mathrm{PE}} \eta^{\mathrm{PC}} A^{\mathrm{PV}} \qquad (8)$$

from the formula (3) and the formula(6), the power output of the wind power generators and the power output of the photovoltaic generation system are not adjustable, so that decision variables are not referred to; and $P^{\mathrm{W}}$ and $P^{\mathrm{PV}}$ are respectively used for expressing total power of regional power grids charged by the wind power generators and the photovoltaic generation system;

(d) building the flexible load mathematical model;

flexible load has adjustability relative to electrovalence, $P_l^{\mathrm{DR}}$ is set to express reduced active power of $l$th flexible load due to demand response, therefore, caused economic losses are set to be $C_l^{\mathrm{DR}}(P_l^{\mathrm{DR}})$, the specific formula is shown as follows:

$$C_l^{\mathrm{DR}}(P_l^{\mathrm{DR}}) = a_l^{\mathrm{DR}}(P_l^{\mathrm{DR}})^2 + b_l^{\mathrm{DR}} P_l^{\mathrm{DR}} + c_l^{\mathrm{DR}} \qquad (9)$$

wherein $a_l^{\mathrm{DR}}$, $b_l^{\mathrm{DR}}$, and $c_l^{\mathrm{DR}}$ are respectively cost coefficients,
and demand for active power of the flexible load in the region of the power grid is limited by the following factors:

$$0 \leq P_l^{\mathrm{DR}} \leq P_{l-\max}^{\mathrm{DR}} \qquad (10)$$

wherein $P_{l-\max}^{\mathrm{DR}}$ is the maximum value constrain of active power of the flexible load.

3. The multi-agent load regulating and controlling method based on edge computing according to claim 2, **characterized in that** the specific method of the step 2 comprises the steps:

setting a tie-line $(i, j)$ between the regional power grids and it's admittance is $y_{i,j}$, enabling the regional power grid $i$ to be connected with the regional power grid $j$; for local voltage $V_j$ and phase position $\theta_j$ of a connecting point of the given regional power grid $j$, transmitting active power $P_{i,j}$ on the connecting point of the regional power grid $i$ through the tie-line $(i, j)$, as shown in the following formula:

$$P_{i,j} = V_i^2 \operatorname{Re}(y_{i,j}) - V_i \tilde{V}_j (\operatorname{Re}(y_{i,j}) \cos(\theta_i - \tilde{\theta}_j) + \operatorname{Im}(y_{i,j}) \sin(\theta_i - \tilde{\theta}_j)) \quad (11)$$

wherein $V_i$ and $\theta_i$ are respectively the local voltage and the phase position of the connecting point of the regional power grid $i$, $\tilde{V}_i$ and $\tilde{\theta}_i$ as well as $\tilde{V}_j$ and $\tilde{\theta}_j$ are respectively the voltage and the phase position of a coupling region, perceived by the connecting points of the regional power grid $i$ and the regional power grid $j$ through edge computing, and meet the following equality constraint:

$$\begin{bmatrix} V_i \\ \theta_i \end{bmatrix} = \begin{bmatrix} \tilde{V}_i \\ \tilde{\theta}_j \end{bmatrix}, \begin{bmatrix} V_j \\ \theta_j \end{bmatrix} = \begin{bmatrix} \tilde{V}_i \\ \tilde{\theta}_j \end{bmatrix} \tag{12}$$

using $v_{(\cdot)}$ and $\tilde{v}_{(\cdot)}$ for respectively expressing vector $[V_{(\cdot)}, \theta_{(\cdot)}]^T$ and $[\tilde{V}_{(\cdot)}, \tilde{\theta}_{(\cdot)}]^T$, wherein $(\cdot)$ expresses a symbol $i$ or $j$; if $V_i = \tilde{V}_j$ and $\theta_i = \theta_j$, $P_{i,j} = 0$, and

if the tie-line does not exist in the regional power grid $i$ and the regional power grid $j$, $y_{i,j} = 0$, and $P_{i,j} = 0$;

meanwhile, obtaining power grid's power balance relationship in the region according to the electric power node data model in the regional power grids built in step 1 and the line loss intelligently perceived by tie-line between regions, and in order to guarantee safe and reliable operation of the power grid, building a mathematical model of net active power charged into by busbar of the regional power grid $i$, as shown in the following formula:

$$P_i = \sum_{k \in \kappa_i^G} P_{i,k}^G + \sum_{l \in \kappa_i^{DR}} P_{i,l}^{DR} + P_i^W + P_i^{PV} - P_i^D - \sum_{(i,j) \in T_i} P_{i,j} \tag{13}$$

wherein $\kappa_i^G$ and $\kappa_i^{DR}$ respectively express thermal power generation device and flexible load device in the regional power grid $i$; assuming that $T = \{\forall(i,j)|\forall i,j \in M, i \neq j\}$ expresses a tie-line set between all the regional power grids, wherein all the internetwork tie-lines $T_i$ connected with the regional power grid $i$ are defined as $T_i$

$= \{\forall(i,j)|\forall j \in M, i = j\}$, $M$ is a set of all the regional power grids in the region, and $P_i^D$ is demand power of rigid load in the regional power grid $i$;

wholly dividing multiple regional power grids in a certain range into interval power grids, enabling tie-lines and network loss to exist in different interval power grids as well, assuming that all the interval power grids are wholly connected, i.e., no independent interval power grid exists, and all the interval power grids form the whole power grid system, so building the model for balancing the line loss of the interval power grids and the power of the system, as shown in the formula:

$$P_{s,t} = V_s^2 \operatorname{Re}(y_{s,t}) - V_s V_t (\operatorname{Re}(y_{s,t}) \cos(\theta_s - \theta_t) + \operatorname{Im}(y_{s,t}) \sin(\theta_s - \theta_t)) \tag{14a}$$

$$\sum_{s \in R} \sum_{i \in s} P_i + \sum_{(s,t) \in R_s} P_{s,t} = 0 \tag{14b}$$

wherein $P_{s,t}$ is the line loss of the tie-line between the interval power grid $s$ and the interval power grid $t$, while $V_s$ and $V_t$ as well as $\theta_s$ and $\theta_t$ are respectively the voltages and the phase angles of two ends of the tie-line between two interval power grids, and $y_{s,t}$ is the admittance of the interval tie-line.

4. The multi-agent load regulating and controlling method based on edge computing according to claim 3, **characterized in that** the specific method of the step 3 comprises the steps:

only considering the total cost namely the generation cost and the demand response cost of the regional power grid $i$, building an object function considering economic benefits, as shown in the following formula:

$$C_i = \sum_{k \in \kappa_i^G} C_k^G(P_k^G) + \sum_{k \in \kappa_i^{DR}} C_k^{DR}(P_k^{DR}) \tag{15}$$

considering the constraint problem, expressing the optimal problem of economic benefits of the regional power grid $i$ as:

$$\min_{x_i} \quad C_i(x_i) \tag{16a}$$

$$\text{s. t.} \quad h_i\left(x_i\right) \le 0, \quad \forall\left(i,j\right) \in T_i \tag{16b}$$

in the formula (16b), defining decision variable $x_i$ as $x_i = \left\{ P_k^{\mathrm{G}}, P_l^{\mathrm{DR}}, V_i, \theta_i, \tilde{\mathrm{V}}_j, \tilde{\theta}_j \middle| k \in \kappa_i^{\mathrm{G}}, l \in \kappa_i^{\mathrm{DR}} \right\}$, wherein $h_i(x_i)$ expresses the vector value of the constraint and comprises constraint of the volume of generator in the regional power grid $i$ as shown in the formula (2), constraint of the volume of demand response as shown in the formula (10), constraint of interchange power of the tie-line as shown in the formula (11), and power balance constraints as shown in the formula (13) and the formula (14);

so considering multi interconnection regional power grids, the optimal problem of interval power grids'economic benefits is modeled as:

$$\min_{x_i, i \in M} \quad \sum_{i \in M} C_i\left(x_i\right) \tag{17a}$$

$$\text{s. t.} \quad h_i\left(x_i\right) \le 0, \quad \forall i \in M$$
$$v_i - \tilde{v}_i = 0, \quad \forall\left(i,j\right) \in T \tag{17b}$$

wherein the formula (17b) describes that the coupling variable $\tilde{v}_i = [\tilde{V}_i, \tilde{\theta}_i]^T$ between lines is regarded as interface or service which is provided by the regional power grid $i$ for all the regions connected with the regional power grid i due to the existence of the tie-line $(i, j)$.

5. The multi-agent load regulating and controlling method based on edge computing according to claim 4, **characterized in that** the specific method of the step 4 comprises the steps:

converting the economic benefit optimal object function of the interval power grids into the augmented Lagrange matrix, and firstly rewriting $C_i$ into the following expanded form:

$$\overline{C}_i\left(x_i\right) = \begin{cases} C_i\left(x_i\right), & h_i\left(x_i\right) \le 0 \\ \infty, & h_i\left(x_i\right) > 0 \end{cases} \tag{18}$$

to separate the minimum object with the tie-line constraint condition, defining a constraint index for the object function, as shown in the formula:

$$I\left(x\right) = \begin{cases} 0, & x = 0 \\ \infty, & x \ne 0 \end{cases} \tag{19}$$

enabling the formula (17) to be equivalent to:

$$\min \sum_{i \in M} \overline{C}_i\left(x_i\right) + \sum_{(i,j) \in T} I\left(v_i - \tilde{v}_i\right) \tag{20}$$

by introducing auxiliary variables $v_i^c = \left[ V_i^c, \theta_i^c \right]^T$ and $\tilde{v}_i^c = \left[ \tilde{V}_i^c, \tilde{\theta}_i^c \right]^T$ representing all connecting lines $(i, j) \in T$ connected with the regional power grid $i$, rewriting the formula (20) as:

$$\min \sum_{i \in M} \overline{C}_i\left(x_i\right) + \sum_{(i,j) \in T} I\left(v_i^c - \tilde{v}_i^c\right) \tag{21a}$$

$$\text{s. t.} \quad v_i - \tilde{v}_i^c = 0, \quad \forall (i,j) \in T$$
$$\tilde{v}_i - v_i^c = 0, \quad \forall (i,j) \in T \tag{21b}$$

wherein two terms of the object function (21a) are separated with the constraint condition, and further an augmented Lagrange function is constructed, as shown in the following formula:

$$L_\rho\left(x, v^c, \tilde{v}^c, \lambda\right) = \sum_{(i,j)\in T} I\left(v_i^c - \tilde{v}_i^c\right) + \sum_{i\in M} \left(\overline{C}_i(x_i)\right.$$
$$+ \lambda_i^T \begin{bmatrix} v_i - \tilde{v}_i^c \\ \tilde{v}_j - v_j^c \end{bmatrix}_{T_i} + \frac{\rho}{2} \begin{bmatrix} v_i - \tilde{v}_i^c \\ \tilde{v}_j - v_j^c \end{bmatrix}_{T_i}^T \begin{bmatrix} v_i - \tilde{v}_i^c \\ \tilde{v}_j - v_j^c \end{bmatrix}_{T_i} \left. \right) \tag{22}$$

defining $x=[x_1,\dots, x_M]^T$ as a control variable, and $\lambda_i^T$ as the Lagrange coefficient representing voltage differences between the outside connecting line of the regional power grid $i$, so that $\begin{bmatrix} v_i - \tilde{v}_i^c \\ \tilde{v}_j - v_j^c \end{bmatrix}_{T_i}$ is defined as $\text{diag}\left\{ v_i - \tilde{v}_i^c, \tilde{v}_j - v_j^c \middle| (i,j) \in T_i \right\} \cdot 1$, and $\rho$ is the penalty factor of the augmented Lagrange multiplier, $\rho > 0$; Solving the augmented Lagrange function by the alternating direction method of multipliers, to realize the regulation and control of load of the power grid system.

**Patentansprüche**

1. Edge-Computing basiertes Mehragenten-Ladungsregelungs- und Steuerungsverfahren, **gekennzeichnet dadurch, dass** es die folgenden Schritte umfasst:

Schritt 1: Division des Stromnetzes in einer Region in regionalen Stromnetzen, die gemäss Stromversorgungsknoten in der Nähe eines Umspannwerks gegenseitig verbunden sind, durch Verwendung des Umspannwerks als Zentrum, und Aufbau von Datenmodellen für Stromversorgungsknoten innerhalb der regionalen Stromnetze ohne Berücksichtigung von Netzverlusten in der Region,
worin die Stromversorgungsknoten eine verschiedene elektrische Ausrüstung und Erzeugungsausrüstung sind, die aufgebauten Datenmodelle für Stromversorgungsknoten innerhalb der regionalen Stromnetze umfassen das Datenmodell für thermische Stromerzeugung, das mathematische Modell für Windkrafterzeugung, das mathematische Modell der Erzeugung des photovoltaischen Systems und das mathematische Modell für flexible Ladungen;
Schritt 2: vorausgesetzt, es existiert eine physikalische Amtsleitung zwischen jeweils zwei regionalen Stromnetzen, in diesem Moment, die Admittanz der Amtsleitung einstellen, die Kopplungsbeziehung zwischen den regionalen Stromnetzen berücksichtigen, das Wahrnehmungsmodell basierend auf Edge-Computing erstellen, die Spannung und den Phasenwinkel von zwei Enden der Amtsleitung intelligenterweise wahrnehmen; den Leitungsverlust zwischen den regionalen Stromnetzen berechnen, die Produktionsleistung und die Verbrauchsleistung in den regionalen Stromnetzen überlagern, um die Nettowirkleistung von den regionalen Stromnetzen zu erhalten; und gleichzeitig den Leitungsverlust von den regionalen Stromnetzen in einem bestimmten Bereich berechnen, damit die Nettowirkleistung von den regionalen Stromnetzen ein Leistungsgleichgewicht erreichen kann;
Schritt 3: ein einzelnes regionales Stromnetz als Agent betrachten, vorausgesetzt, dass das Schema des maximalen wirtschaftlichen Nutzens in den regionalen Stromnetzen nur die thermischen Stromerzeugungskosten und Bedarf-Reaktion-Kosten berücksichtigt, um die Objektfunktion des regionalen Stromnetzes zu definieren; die optimale Objektfunktion des wirtschaftlichen Nutzens von Intervall-Stromnetzen gemäss der Objektfunktion von den regionalen Stromnetzen ableiten, und relevante Gleichheits- und Ungleichheitsbeschränkungen definieren;

Schritt 4: Terme des wirtschaftlichen Nutzens und Terme der elektrischen Leistungsbilanz als Objekte gemäss der optimalen Objektfunktion des wirtschaftlichen Nutzens von den Intervall-Stromnetzen extrahieren, die Kopplung von Anschlussspannungen und Phasenwinkeln zwischen Regionen als Zwangsbedingungen einstellen; das Problem der Optimierung der Wirtschaft und Regulierung der Ladung von den Intervall-Stromnetzen, in das Problem des Ausgleichs und der Kopplung des ganzen wirtschaftlichen Nutzens von den verteilten regionalen Stromnetzen und der Energie zwischen Regionen umwandeln; eine erweiterte Lagrange-Matrix einstellen, die Objektfunktion und die Zwangsbedingungen, in eine zweimal differenzierbare stark konvexe Funktion umwandeln, und die Funktion unter Verwendung des alternierenden Richtungsverfahren des Multiplikatoralgorithmus (ADMM) lösen, um eine Regulierung und Steuerung der Ladung des Systems von Stromnetzen zu erreichen.

2. Edge-Computing basiertes Mehragenten-Ladungsregelungs- und Steuerungsverfahren nach Anspruch 1, **dadurch gekennzeichnet, dass** das spezifische Verfahren zum Aufbau, in Schritt 1, von einem Datenmodell für Stromversorgungsknoten innerhalb der regionalen Stromnetze die folgenden Schritte umfasst:

(a) Aufbau des mathematischen Modells für thermische Stromerzeugung:

um die Zuverlässigkeit und die Flexibilität des Stromnetzes zu garantieren, das Datenmodell für thermische Stromerzeugung umfasst Erzeugungskosten und Betriebsbeschränkungen des thermischen Stromgenerators, und die Funktion der Erzeugungskosten des thermischen Stromgenerators ist als die folgende Formel dargestellt:

$$C_k^{\mathrm{G}}(P_k^{\mathrm{G}}) = a_k^{\mathrm{G}}(P_k^{\mathrm{G}})^2 + b_k^{\mathrm{G}} P_k^{\mathrm{G}} + c_k^{\mathrm{G}} \qquad (1)$$

worin $C_k^{\mathrm{G}}()$ die Erzeugungskosten von dem k-ten thermischen Stromgeneratorsatz sind, $P_k^{\mathrm{G}}$ ist die Wirkleistung, die in der Region des k-ten thermischen Stromgeneratorsatzes erzeugt ist, $a_k^{\mathrm{G}}$, $b_k^{\mathrm{G}}$ und $c_k^{\mathrm{G}}$ sind Kostenkoeffizienten der thermischen Stromerzeugung des k-ten thermischen Stromgeneratorsatzes;

und die Wirkleistung, die in der Region des thermischen Stromgeneratorsatzes erzeugt ist, ist durch die folgenden Faktoren begrenzt:

$$P_{k-\mathrm{min}}^{\mathrm{G}} \leq P_k^{\mathrm{G}} \leq P_{k-\mathrm{max}}^{\mathrm{G}} \qquad (2)$$

worin $P_{k-\mathrm{min}}^{\mathrm{G}}$ und $P_{k-\mathrm{max}}^{\mathrm{G}}$ beziehungsweise die Obergrenze und die Untergrenze der thermischen Leistungsabgabe von dem thermischen Stromgeneratorsatz sind;

(b) Aufbau des mathematischen Modells für Windkrafterzeugung:

ein Erzeugungsmodell des Windkraftgenerators gemäss den Eigenschaften der Windkrafterzeugung einstellen, die Eigenschaften der Leistungsabgabekurve der Windkrafterzeugung berücksichtigen, die Erzeugungsleistung eines einzelnen Windkraftgenerators, die als stückweise Funktion ausgedrückt ist, ermöglichen, wie es in der Formel gezeigt wird:

$$P_n^{\mathrm{W}}(V_n^{\mathrm{W}}) = \begin{cases} 0 & ,0 \leq V_n^{\mathrm{W}} < v_{n-ci}^{\mathrm{W}} \\ a_n^{\mathrm{W}} + b_n^{\mathrm{W}} V_n^{\mathrm{W}} & ,v_{n-ci}^{\mathrm{W}} \leq V_n^{\mathrm{W}} < v_{n-cr}^{\mathrm{W}} \\ P_R^{\mathrm{W}} & ,v_{n-cr}^{\mathrm{W}} \leq V_n^{\mathrm{W}} < v_{n-co}^{\mathrm{W}} \\ 0 & ,v_{n-co}^{\mathrm{W}} \leq V_n^{\mathrm{W}} \end{cases} \qquad (3)$$

worin $P_n^{\mathrm{W}}$ die Erzeugungsleistung des $n$-ten Windkraftgenerators ist, $V_n^{\mathrm{W}}$ ist die Windgeschwindigkeit des $n$-ten Windkraftgenerators, $v_{n-ci}^{\mathrm{W}}$ ist die minimale Windgeschwindigkeit, die in der Lage den Windkraftgenerator anzutreiben ist, damit er funktioniert, $v_{n-cr}^{\mathrm{W}}$ ist die Nennwindgeschwindigkeit des $n$-ten Windkraftgenerators, der funktioniert, wenn er die Nennleistung erreicht hat, $v_{n-co}^{\mathrm{W}}$ ist die maximale Windgeschwindigkeit nämlich die abgeschaltete Windgeschwindigkeit, wenn der Windkraftgenerator wegen zu grosser Windgeschwindigkeit geschlosssen ist, $P_R^{\mathrm{W}}$ ist die Nennwirkleistung des $n$-ten Windkraftgenerators; verschiedene Typen von Windkraftgeneratoren zeigen verschiedene Anstiegsfunktionen in der Leistungsanstiegsphase der Leistungsabgabekurve, $a_n^{\mathrm{W}}$ und $b_n^{\mathrm{W}}$ sind beziehungsweise Konstanten, die die Kurvenform der Funktion beeinflussen, wie es in der folgenden Formel gezeigt wird:

$$a_n^{\mathrm{W}} = \frac{P_n^{\mathrm{W}} v_{n-ci}^{\mathrm{W}}}{v_{n-ci}^{\mathrm{W}} - v_{n-cr}^{\mathrm{W}}}, \quad b_n^{\mathrm{W}} = \frac{P_n^{\mathrm{W}}}{v_{n-cr}^{\mathrm{W}} - v_{n-ci}^{\mathrm{W}}} \qquad (4)$$

auf der Grundlage der Lösung der Erzeugungsleistung $P_n^{\mathrm{W}}$ des einzelnen Windkraftgenerators, die Gesamtleistung $P^{\mathrm{W}}$ des Windkrafterzeugungssystems bestehend aus $M^{\mathrm{W}}$ Windkraftgeneratoren ist:

$$P^{\mathrm{W}}(V^W) = \eta_t^{\mathrm{W}} \sum_{n=1}^{M^{\mathrm{W}}} \eta_n^{\mathrm{W}} P_n^{\mathrm{W}}(V_n^{\mathrm{W}}) \qquad (5)$$

worin $\eta_n^{\mathrm{W}}$ der Wirkungsgrad der Windenergieumwandlung des einzelnen w Windkraftgenerators ist, und $\eta_t^{\mathrm{W}}$ ist der Störungskoeffizient zwischen den Windkraftgeneratoren in dem Windkrafterzeugungssystem und ist entsprechend der tatsächlichen Situation des Windfeldes eingestellt;

(c) Aufbau des mathematischen Modells der Erzeugung des photovoltaischen Systems:

die Erzeugungsgrösse des photovoltaischen Systems ist relevant für die Beleuchtungsstärke und die Beleuchtungsfläche von photovoltaischen Platten, so dass die gesamte Erzeugungsleistung $P^{PV}$ des photovoltaischen Systems als die folgende Formel gezeigt wird:

$$P^{\mathrm{PV}}(r_{solar}) = r_{solar} S^{\mathrm{PV}} \eta^{\mathrm{PV}} \qquad (6)$$

worin $r_{solar}$ die Sonneneinstrahlungsmenge ist, $S^{\mathrm{PV}}$ sind die Gesamtflächen von photovoltaischen PV Panels in dem photovoltaischen System, $\eta^{PV}$ ist die Effizienz des photovoltaischen Systems,
$M^{PV}$ photovoltaische Panels sind insgesamt in dem photovoltaischen System angeordnet, die Gesamtfläche der photovoltaischen Panels in dem photovoltaischen System wird dann als die folgende Formel gezeigt:

$$S^{\mathrm{PV}} = \sum_{m=1}^{M^{\mathrm{PV}}} S_m \qquad (7)$$

worin $S_m$ die Fläche eines einzelnen photovoltaischen Panels ist; $PV$
die Effizienz $\eta^{PV}$ des photovoltaischen Systems PE wird gemeisam von der Effizienz $\eta^{PE}$ der photovoltai-

schen Panels, von der Leistungsregulierungseffizienz $\eta^{PC}$ und dem Packungsfaktor $A^{PV}$ festgelegt, wie es in der folgenden Formel gezeigt wird:

$$\eta^{PV} = \eta^{PE}\eta^{PC}A^{PV} \qquad (8)$$

aus der Formel (3) und der Formel (6), die Leistungsabgabe der Windkraftgeneratoren und die Leistungsabgabe des photovoltaischen Erzeugungssystems sind nicht einstellbar, so dass auf Entscheidungsvariablen nicht Bezug genommen wird; und $P^W$ und $P^{PV}$ sind beziehungsweise verwendet, um die Gesamtleistung der regionalen Stromnetze auszudrücken, die von den Windkraftgeneratoren und dem photovoltaischen Erzeugungssystem geladen werden;

(d) Aufbau des mathematischen Modells für flexible Ladungen:

die flexible Ladung ist relativ zur Elektrovalenz einstellbar, $P_l^{DR}$ ist eingestellt, um die reduzierte Wirkleistung der $l$-ten flexiblen Ladung auf Grund von der Bedarfsreaktion auszudrücken, dadurch werden die verursachten wirtschaftlichen Verluste gleich $C_l^{DR}(P_l^{DR})$ gesetzt, die spezifische Formel wird wie folgt gezeigt:

$$C_l^{DR}(P_l^{DR}) = a_l^{DR}(P_l^{DR})^2 + b_l^{DR}P_l^{DR} + c_l^{DR} \qquad (9)$$

worin $a_l^{DR}$, $b_l^{DR}$, und $c_l^{DR}$ beziehungsweise Kostenkoeffizienten sind, und der Bedarf an Wirkleistung der flexiblen Ladung in der Region von dem Stromnetz ist durch die folgenden Faktoren begrenzt:

$$0 \le P_l^{DR} \le P_{l-max}^{DR} \qquad (10)$$

worin $P_{l-max}^{DR}$ die Maximalwertbeschränkung von der Wirkleistung der flexiblen Ladung ist.

3. Edge-Computing basiertes Mehragenten-Ladungsregelungs- und Steuerungsverfahren nach Anspruch 2, **dadurch gekennzeichnet, dass** das spezifische Verfahren des Schritts 2 die folgenden Schritte umfasst:

eine Amtsleitung ($i$, $j$) zwischen den regionalen Stromnetzen setzen, und ihre Admittanz ist $y_{i,j}$, wodurch das regionale Stromnetz $i$ mit dem regionalen Stromnetz $j$ verbunden werden kann; für örtliche Spannung $V_j$ und Phasenlage $\theta_j$ eines Anschlusspunktes von dem gegebenen regionalen Stromnetz $j$, die Wirkleistung $P_{i,j}$ am Anschlusspunkt des regionalen Stromnetzes $i$ durch die Amtsleitung ($i$, $j$) übertragen, wie es in der folgenden Formel gezeigt wird:

$$P_{i,j} = V_i^2 \operatorname{Re}(y_{i,j}) - V_i\tilde{V}_j(\operatorname{Re}(y_{i,j})\cos(\theta_i - \tilde{\theta}_j) + \operatorname{Im}(y_{i,j})\sin(\theta_i - \tilde{\theta}_j)) \qquad (11)$$

worin $V_i$ und $\theta_i$ beziehungsweise die örtliche Spannung und die Phasenlage des Anschlusspunktes von dem regionalen Stromnetz $i$ sind, $\tilde{V}_i$ und $\tilde{\theta}_i$ ebenso gut wie $V_j$ und $\theta_j$ sind beziehungsweise die Spannung und die Phasenlage einer Kopplungsregion, von den Anschlusspunkten des regionalen Stromnetzes $i$ und des regionalen Stromnetzes $j$ durch Edge-Computing wahrgenommen, und die folgende Gleichheitsbeschränkung erfüllen:

$$\begin{bmatrix} V_i \\ \theta_i \end{bmatrix} = \begin{bmatrix} \tilde{V}_i \\ \tilde{\theta}_j \end{bmatrix}, \begin{bmatrix} V_j \\ \theta_j \end{bmatrix} = \begin{bmatrix} \tilde{V}_i \\ \tilde{\theta}_j \end{bmatrix} \qquad (12)$$

Verwendung von $v_{(\cdot)}$ und $\tilde{v}_{(\cdot)}$ beziehungsweise zum Ausdrücken vom Vektor $[V_{(\cdot)}, \theta_{(\cdot)}]^T$ und $[\tilde{V}_{(\cdot)}, \tilde{\theta}_{(\cdot)}]^T$, worin ($\cdot$) ein Symbol $i$ oder $j$ ausdrückt;
wenn $V_i = \tilde{V}_j$ und $\theta_i = \tilde{\theta}_j$, $P_{i,j} = 0$, und

wenn die Amtsleitung in dem regionalen Stromnetz *i* und in dem regionalen Stromnetz *j* nicht vorhanden ist, $y_{i,j}$ = 0 und $P_{i,j}$ = 0;

inzwischen, die Stromnetz-Leistungsbilanzbeziehungen in der Region bekommen gemäss dem Datenmodell für Stromknoten in den in Schritt 1 aufgebauten regionalen Stromnetzen, und gemäss dem Leitungsverlust, der von einer Amtsleitung zwischen Regionen intelligenterweise wahrgenommen ist, und um einen sicheren und zuverlässigen Betrieb des Stromnetzes zu garantieren, ein mathematisches Modell der Nettowirkleistung aufbauen, die von der Sammelschiene des regionalen Stromnetzes *i* darin eingespeist ist, wie es in der folgenden Formel gezeigt wird:

$$P_i = \sum_{k \in \kappa_i^{\mathrm{G}}} P_{i,k}^{\mathrm{G}} + \sum_{l \in \kappa_i^{\mathrm{DR}}} P_{i,l}^{\mathrm{DR}} + P_i^{\mathrm{W}} + P_i^{\mathrm{PV}} - P_i^{\mathrm{D}} - \sum_{(i,j) \in T_i} P_{i,j} \qquad (13)$$

G DR

worin $\kappa_i^{\mathrm{G}}$ und $\kappa_i^{\mathrm{DR}}$ beziehungsweise die thermische Energieerzeugungsvorrichtung und die Vorrichtung für flexible Ladung in dem regionalen Stromnetz *i* ausdrücken; vorausgesetzt, dass $T = \{\forall (i,j) | \forall i, j \in M, i \neq j\}$ einen Amtsleitungssatz zwischen allen regionalen Stromnetzen ausdrückt, worin alle Inter-Netzwerk-Amtsleitungen $T_i$, die mit dem regionalen Stromnetz *i* verbunden sind, als $T_i = \{\forall (i,j) | \forall j \in M, i \neq j\}$ definiert sind, *M* ist ein Satz von allen regionalen Stromnetzen in der Region, und $P_i^{\mathrm{D}}$ ist die Bedarfsleistung von starrer Ladung in dem regionalen Stromnetz *i*;

vollständige Aufteilung mehrerer regionaler Stromnetze in einem bestimmten Bereich in Intervall-Stromnetze, wodurch Amtsleitungen und ein Netzwerkverlust ebenso vorhanden in verschiedenen Intervall-Stromnetzen sein können, vorausgesetzt, dass alle Intervall-Stromnetze ganz verbunden sind, d.h. es existiert kein unabhängiges Intervall-Stromnetz, und alle Intervall-Stromnetze gestalten das gesamte Stromnetzsystem, so das Modell zum Ausgleich des Leitungsverlusts von den Intervall-Stromnetzen und die Leistung des Systems aufbauen, wie es in der Formel gezeigt wird:

$$P_{s,t} = V_s^2 \operatorname{Re}(y_{s,t}) - V_s V_t (\operatorname{Re}(y_{s,t}) \cos(\theta_s - \theta_t) + \operatorname{Im}(y_{s,t}) \sin(\theta_s - \theta_t)) \qquad (14a)$$

$$\sum_{s \in R} \sum_{i \in s} P_i + \sum_{(s,t) \in R_s} P_{s,t} = 0 \qquad (14b)$$

worin $P_{s,t}$ der Leitungsverlust der Amtsleitung zwischen dem Intervall-Stromnetz s und dem Intervall-Stromnetz *t* ist, während $V_s$ und $V_t$ ebenso gut wie $\theta_s$ und $\theta_t$ beziehungsweise die Spannungen und die Phasenwinkel von zwei Enden der Amtsleitung zwischen zwei Intervall-Stromnetzen sind, und $y_{s,t}$ ist die Admittanz der Intervall-Amtsleitung.

4. Edge-Computing basiertes Mehragenten-Ladungsregelungs- und Steuerungsverfahren nach Anspruch 3, **dadurch gekennzeichnet, dass** das spezifische Verfahren des Schritts 3 die folgenden Schritte umfasst:

nur den Gesamtkosten, nämlich den Erzeugungskosten und den Bedarf-Reaktion-Kosten des regionalen Stromnetzes *i* berücksichtigen, eine Objektfunktion aufbauen unter Berücksichtigung des wirtschaftlichen Nutzens, wie es in der folgenden Formel gezeigt wird:

$$C_i = \sum_{k \in \kappa_i^{\mathrm{G}}} C_k^{\mathrm{G}}(P_k^{\mathrm{G}}) + \sum_{k \in \kappa_i^{\mathrm{DR}}} C_k^{\mathrm{DR}}(P_k^{\mathrm{DR}}) \qquad (15)$$

das Beschränkungsproblem berücksichtigen, das optimale Problem des wirtschaftlichen Nutzens des regionalen Stromnetzes *i* ausdrücken als:

$$\min_{x_i} \quad C_i(x_i) \qquad (16a)$$

$$\text{s. t.} \quad h_i\left(x_i\right) \leq 0, \quad \forall\left(i, j\right) \in T_i \tag{16b}$$

in der Formel (16b), die Entscheidungsvariable $x_i$ als $x_i = \left\{P_k^{\mathrm{G}}, P_l^{\mathrm{DR}}, V_i, \theta_i, \tilde{V}_j, \tilde{\theta}_j \middle| k \in \kappa_i^{\mathrm{G}}, l \in \kappa_i^{\mathrm{DR}}\right\}$ definieren, worin $h_i(x_i)$ den Vektorwert der Beschränkung ausdrückt und die Beschränkung des Volumens des Generators in dem regionalen Stromnetz $i$ umfasst, wie es in der Formel (2) gezeigt wird, die Beschränkung des Volumens der Bedarf-Reaktion, wie es in der Formel 10) gezeigt wird, die Beschränkung der Austauschleistung der Amtsleitung, wie es in der Formel (11) gezeigt wird, die Beschränkungen des Leistungsgleichgewichts, wie es in der Formel (13) und in der Formel (14) gezeigt wird;
so regionale Sromnetze mit mehreren Verbindungsleitungen berücksichtigen, das optimale Problem des wirtschaftlichen Nutzens der Intervall-Stromnetze ist modelliert als:

$$\min_{x_i, i \in M} \quad \sum_{i \in M} C_i\left(x_i\right) \tag{17a}$$

$$\text{s. t.} \quad h_i\left(x_i\right) \leq 0, \quad \forall i \in M$$
$$v_i - \tilde{v}_i = 0, \quad \forall\left(i, j\right) \in T \tag{17b}$$

worin die Formuel (17b) beschreibt, dass die Kopplungsvariable $\tilde{v}_i = [\tilde{V}_i, \tilde{\theta}_i]^T$ zwischen Leitungen als Schnittstelle oder Dienst angesehen wird, die oder der von dem regionalen Sromnetz $i$ bereitgestellt wird, für alle Regionen, die aufgrund der Präsenz der Amtsleitung $(i, j)$ mit dem regionalen Sromnetz i verbunden sind.

5. Edge-Computing basiertes Mehragenten-Ladungsregelungs- und Steuerungsverfahren nach Anspruch 4, **dadurch gekennzeichnet, dass** das spezifische Verfahren des Schritts 4 die folgenden Schritte umfasst:

die wirtschaftliche Nutzenoptimalobjektfunktion der Intervall-Stromnetze, in die erweiterte Lagrange-Matrix umwandeln, und zuerst $C_i$ in die folgende ausgeweitete Form umschreiben:

$$\overline{C}_i\left(x_i\right) = \begin{cases} C_i\left(x_i\right), & h_i\left(x_i\right) \leq 0 \\ \infty, & h_i\left(x_i\right) > 0 \end{cases} \tag{18}$$

um das minimale Objekt mit der Beschränkungsbedingung der Amtsleitung zu trennen, einen Beschränkungsindex für die Objektfunktion definieren, wie es in der Formel gezeigt wird:

$$I\left(x\right) = \begin{cases} 0, & x = 0 \\ \infty, & x \neq 0 \end{cases} \tag{19}$$

ermöglichen, dass die Formel (17) äquivalent ist zu:

$$\min \sum_{i \in M} \overline{C}_i\left(x_i\right) + \sum_{(i, j) \in T} I\left(v_i - \tilde{v}_i\right) \tag{20}$$

durch Einführung von Hilfsvariablen $v_i^c = \left[V_i^c, \theta_i^c\right]^T$ und $\tilde{v}_i^c = \left[\tilde{V}_i^c, \tilde{\theta}_i^c\right]^T$, die alle mit dem regionalen Stromnetz $i$ verbundenen Verbindungslinien $(i, j) \in T$ repräsentieren, die Formel (20) umschreiben als:

$$\min \sum_{i \in M} \overline{C}_i\left(x_i\right) + \sum_{(i, j) \in T} I\left(v_i^c - \tilde{v}_i^c\right) \tag{21a}$$

$$\text{s. t.} \quad v_i - \tilde{v}_i^c = 0, \quad \forall (i,j) \in T$$

$$\tilde{v}_i - v_i^c = 0, \quad \forall (i,j) \in T \tag{21b}$$

worin zwei Terme der Objektfunktion (21a) mit der Beschränkungsbedingung getrennt werden, und ausserdem ist eine erweiterte Lagrange-Funktion konstruiert, wie es in der folgenden Formel gezeigt wird:

$$L_\rho \left( x, v^c, \tilde{v}^c, \lambda \right) = \sum_{(i,j) \in T} I \left( v_i^c - \tilde{v}_i^c \right) + \sum_{i \in M} \left( \overline{C}_i (x_i) \right)$$

$$+ \lambda_i^T \begin{bmatrix} v_i - \tilde{v}_i^c \\ \tilde{v}_j - v_j^c \end{bmatrix}_{T_i} + \frac{\rho}{2} \begin{bmatrix} v_i - \tilde{v}_i^c \\ \tilde{v}_j - v_j^c \end{bmatrix}_{T_i}^T \begin{bmatrix} v_i - \tilde{v}_i^c \\ \tilde{v}_j - v_j^c \end{bmatrix}_{T_i} \; ) \tag{22}$$

definieren $x = [x_1, \cdots, x_M]^T$ als eine Kontrollvariable, und $\lambda_i^T$ als der Lagrange-Koeffizient, der Spannungsdifferenzen zwischen der äusseren Verbindungsleitung des regionalen Stromnetz *i darstellt,* so dass $\begin{bmatrix} v_i - \tilde{v}_i^c \\ \tilde{v}_j - v_j^c \end{bmatrix}_{T_i}$

als $\operatorname{diag} \left\{ v_i - \tilde{v}_i^c, \tilde{v}_j - v_j^c \,\middle|\, (i,j) \in T_i \right\} \cdot 1$ definiert wird, und $\rho$ ist der Penalty-Faktor des erweiterten Lagrange-Multiplikators, $\rho > 0$;

die erweiterte Lagrange-Funktion durch das Wechselrichtungsverfahren von Multiplikatoren lösen, um die Regulierung und Steuerung der Ladung des Stromnetzsystems durchzuführen.

## Revendications

1. Procédé de régulation et de commande de charge multi-agent basé sur l'informatique en périphérie, **caractérisé en ce qu'**il comprend les étapes suivantes :

étape 1: la division du réseau d'énergie électrique dans une région en réseaux d'énergie électrique régionaux qui sont connectés mutuellement en fonction de nœuds de puissance électrique à proximité d'une sous-station de transformateur en utilisant la sous-station de transformateur sous la forme d'un centre, et la construction de modèles de données de nœuds de puissance électrique à l'intérieur des réseaux d'énergie électrique régionaux sans considérer de pertes de réseau dans la région,
dans lequel les nœuds de puissance électrique sont divers équipements électriques et équipements de génération, les modèles de données de nœuds de puissance électrique construits à l'intérieur des réseaux d'énergie électrique régionaux comprennent le modèle de données de génération de puissance thermique, le modèle mathématique de génération d'énergie éolienne, le modèle mathématique de génération de système photovoltaïque et le modèle mathématique de charge flexible ;
étape 2: en supposant qu'une ligne d'interconnexion physique existe à chaque fois entre deux réseaux d'énergie électrique régionaux, à ce moment-là, le réglage de l'admittance de la ligne d'interconnexion, en considérant la relation de couplage entre les réseaux d'énergie électrique régionaux, la construction du modèle de perception sur la base de l'informatique en périphérie, la perception de manière intelligente de la tension et de l'angle de phase de deux extrémités de la ligne d'interconnexion ; le calcul de la perte de ligne entre les réseaux d'énergie électrique régionaux, la superposition de la puissance de génération et de la puissance de consommation dans les réseaux d'énergie électrique régionaux afin d'obtenir une puissance active nette des réseaux d'énergie électrique régionaux ; et en même temps, le calcul de la perte de ligne des réseaux d'énergie électrique régionaux dans une certaines plage afin que la puissance active nette des réseaux d'énergie électrique régionaux atteigne un équilibre de puissance ;
étape 3: la considération d'un seul réseau d'énergie électrique régional sous forme d'agent, en supposant que le schéma de bénéfices économiques maximaux dans les réseaux d'énergie électrique régionaux ne considère que le coût de génération de puissance thermique et le coût de réponse à la demande, pour régler la fonction d'objet du réseau d'énergie électrique régional ; la déduction de la fonction d'objet optimale des bénéfices économiques de réseaux d'énergie électrique d'intervalle en fonction de la fonction d'objet des réseaux d'énergie électrique régionaux, et le réglage de contraintes d'égalité et de contraintes d'inégalité adéquates ;

étape 4 : l'extraction de conditions de bénéfices économiques et de conditions d'équilibre de puissance électrique sous la forme d'objets selon la fonction d'objet optimale de bénéfices économiques des réseaux d'énergie électrique d'intervalle, le réglage du couplage de tensions de port et d'angles de phase entre des régions sous la forme de conditions de contraintes ; la conversion du problème d'optimisation d'économies et de régulation de charge des réseaux d'énergie électrique d'intervalle en un problème d'équilibrage et de coulage de l'ensemble des bénéfices économiques des réseaux d'énergie électrique régionaux distribués et de la puissance entre les régions ; le réglage d'une matrice de Lagrange augmentée, la conversion de la fonction d'objet et de contraintes en une fonction convexe forte différentiable deux fois, et la résolution de la fonction en utilisant la méthode des directions alternées de l'algorithme de multiplicateurs (ADMM) afin d'atteindre une régulation et une commande de charge du système de réseau d'énergie électrique.

**2.** Procédé de régulation et de commande de charge multi-agent sur la base de l'informatique en périphérie selon la revendication 1, **caractérisé en ce que** la méthode spécifique pour la construction d'un modèle de données de nœud de puissance électrique à l'intérieur des réseaux d'énergie électrique régionaux à l'étape 1 comprend les étapes :

(a) la construction du modèle mathématique de génération de puissance thermique :

afin de garantir la fiabilité et la flexibilité du réseau d'énergie électrique, le modèle de données de génération de puissance thermique comprend des contraintes de coût de génération et de fonctionnement du générateur de puissance thermique, et la fonction de coût de génération du générateur de puissance thermique est représentée par la formule suivante :

$$C_k^{\mathrm{G}}(P_k^{\mathrm{G}}) = a_k^{\mathrm{G}}(P_k^{\mathrm{G}})^2 + b_k^{\mathrm{G}} P_k^{\mathrm{G}} + c_k^{\mathrm{G}} \qquad (1)$$

où, $C_k^{\mathrm{G}}()$ est le coût de génération du kième ensemble de générateurs de puissance thermique, $P_k^{\mathrm{G}}$ est la puissance active générée dans la région du kième ensemble de générateurs de puissance thermique,

$a_k^{\mathrm{G}}$, $b_k^{\mathrm{G}}$ et $c_k^{\mathrm{G}}$ sont des coefficients de coût de génération de puissance thermique du kième ensemble de générateurs de puissance thermique ;

et la puissance active générée dans la région de l'ensemble de générateurs de puissance thermique est limitée par les facteurs suivants :

$$P_{k-\min}^{\mathrm{G}} \leq P_k^{\mathrm{G}} \leq P_{k-\max}^{\mathrm{G}} \qquad (2)$$

où, $P_{k-\min}^{\mathrm{G}}$ et $P_{k-\max}^{\mathrm{G}}$ sont respectivement la limite supérieure et la limite inférieure de la sortie de puissance thermique de l'ensemble de générateurs de puissance thermique ;

(b) la construction du modèle mathématique de génération d'énergie éolienne :

le réglage d'un modèle de génération du générateur d'énergie éolienne en fonction des caractéristiques de génération d'énergie éolienne, en considérant les caractéristiques de la courbe de sortie de puissance de génération d'énergie éolienne, en permettant d'exprimer la puissance de génération d'un seul générateur d'énergie éolienne sous la forme d'une fonction à la pièce, comme représenté dans la formule suivante :

$$P_n^{\mathrm{W}}(V_n^{\mathrm{W}}) = \begin{cases} 0 & ,\, 0 \le V_n^{\mathrm{W}} < v_{n-ci}^{\mathrm{W}} \\ a_n^{\mathrm{W}} + b_n^{\mathrm{W}} V_n^{\mathrm{W}} & ,\, v_{n-ci}^{\mathrm{W}} \le V_n^{\mathrm{W}} < v_{n-cr}^{\mathrm{W}} \\ P_R^{\mathrm{W}} & ,\, v_{n-cr}^{\mathrm{W}} \le V_n^{\mathrm{W}} < v_{n-co}^{\mathrm{W}} \\ 0 & ,\, v_{n-co}^{\mathrm{W}} \le V_n^{\mathrm{W}} \end{cases} \qquad (3)$$

où, $P_n^{\mathrm{W}}$ est la puissance de génération du nième générateur d'énergie éolienne, $V_n^{\mathrm{W}}$ est la vitesse du vent du *n*ième générateur d'énergie éolienne, $v_{n-ci}^{\mathrm{W}}$ est la vitesse minimale du vent capable d'entraîner le nième générateur d'énergie éolienne pour fonctionner, $v_{n-cr}^{\mathrm{W}}$ est la vitesse nominale du vent du même générateur d'énergie éolienne en fonctionnement en atteignant la puissance nominale, $v_{n-co}^{\mathrm{W}}$ est la vitesse maximale du vent à savoir la vitesse de coupe-circuit du vent lorsque le générateur d'énergie éolienne est fermé en raison de vitesses trop importantes de vent, $P_R^{\mathrm{W}}$ est la puissance active nominale du *n*ième générateur d'énergie éolienne ; différents types de générateurs d'énergie éolienne présentent différentes fonctions d'ascension au niveau d'ascension de puissance de la courbe de sortie de puissance, $a_n^{\mathrm{W}}$ et $b_n^{\mathrm{W}}$ sont respectivement des constantes influençant la forme de la courbe de la fonction comme représenté dans la formule suivante :

$$a_n^{\mathrm{W}} = \frac{P_n^{\mathrm{W}} v_{n-ci}^{\mathrm{W}}}{v_{n-ci}^{\mathrm{W}} - v_{n-cr}^{\mathrm{W}}}, \quad b_n^{\mathrm{W}} = \frac{P_n^{\mathrm{W}}}{v_{n-cr}^{\mathrm{W}} - v_{n-ci}^{\mathrm{W}}} \qquad (4)$$

sur la base de la résolution de la puissance de génération $P_n^{\mathrm{W}}$ du seul générateur d'énergie éolienne, la puissance totale $P^{\mathrm{W}}$ du système de génération d'énergie éolienne consistant en $M^{\mathrm{W}}$ générateurs d'énergie éolienne est :

$$P^{\mathrm{W}}(V^W) = \eta_t^{\mathrm{W}} \sum_{n=1}^{M^{\mathrm{W}}} \eta_n^{\mathrm{W}} P_n^{\mathrm{W}}(V_n^{\mathrm{W}}) \qquad (5)$$

où, $\eta_n^{\mathrm{W}}$ est le rendement de conversion énergétique du vent du seul générateur d'énergie éolienne, et $\eta_t^{\mathrm{W}}$ est le coefficient de perturbation entre les générateurs d'énergie éolienne dans le système de génération d'énergie éolienne et est réglé en fonction de la situation réelle du champ de vent ;

(c) la construction du modèle mathématique de génération de système photovoltaïque :

l'amplitude de génération du système photovoltaïque est adéquate à l'intensité d'éclairage et la zone d'éclairage de plaques photovoltaïques, de sorte que la puissance de génération totale $P^{PV}$ du système photovoltaïque est représentée par la formule suivante :

$$P^{\mathrm{PV}}(r_{solar}) = r_{solar} S^{\mathrm{PV}} \eta^{\mathrm{PV}} \qquad (6)$$

où, $r_{solar}$ est la quantité de rayonnement solaire, $S^{\mathrm{PV}}$ est la zone totale de panneaux photovoltaïques dans le système photovoltaïque, $\eta^{\mathrm{PV}}$ est le rendement du système photovoltaïque, $M^{\mathbf{PV}}$ panneaux photovoltaïques au total sont agencés dans le système photovoltaïque, alors la zone totale des panneaux photovoltaïques dans le système photovoltaïque est représentée par la formule suivante :

$$S^{\mathrm{PV}} = \sum_{m=1}^{M^{\mathrm{PV}}} S_m \qquad (7)$$

où $S_m$ est la zone d'un seul panneau photovoltaïque ;
le rendement $\eta^{\mathbf{PV}}$ du système photovoltaïque est déterminé conjointement par le rendement $\eta^{PE}$ des panneaux photovoltaïques, le rendement de régulation de puissance $\eta^{PC}$ et le facteur de conditionnement $A^{\mathbf{PV}}$, comme représenté dans la formule suivante :

$$\eta^{\mathrm{PV}} = \eta^{\mathrm{PE}} \eta^{\mathrm{PC}} A^{\mathrm{PV}} \qquad (8)$$

à partir de la formule (3) et de la formule (6), la sortie de puissance des générateurs d'énergie éolienne et la sortie de puissance du système de génération photovoltaïque ne sont pas ajustables, de sorte qu'il n'est pas fait référence à des variables de décision ; et $P^W$ et $P^{PV}$ sont respectivement utilisés pour exprimer la puissance totale de réseaux d'énergie électrique régionaux par les générateurs d'énergie éolienne et le système de génération photovoltaïque ;

(d) la construction du modèle mathématique de charge flexible ;

la charge flexible a une ajustabilité relative à l'électrovalence, $P_l^{\mathrm{DR}}$ est réglé pour exprimer la puissance active réduite de la lième charge flexible en raison de la réponse à la demande, et par conséquent les pertes économiques causées sont réglées pour être $C_l^{\mathrm{DR}}(P_l^{\mathrm{DR}})$, la formule spécifique est représentée comme suit :

$$C_l^{\mathrm{DR}}(P_l^{\mathrm{DR}}) = a_l^{\mathrm{DR}}(P_l^{\mathrm{DR}})^2 + b_l^{\mathrm{DR}} P_l^{\mathrm{DR}} + c_l^{\mathrm{DR}} \qquad (9)$$

où $a_l^{\mathrm{DR}}$, $b_l^{\mathrm{DR}}$ et $c_l^{\mathrm{DR}}$ sont respectivement des coefficients de coût,
et la demande de puissance active de la charge flexible dans la région du réseau d'énergie électrique est limitée par les facteurs suivants :

$$0 \le P_l^{\mathrm{DR}} \le P_{l-\max}^{\mathrm{DR}} \tag{10}$$

où $P_{l-\max}^{\mathrm{DR}}$ est la contrainte de valeur maximale de la puissance active de la charge flexible.

3. Procédé de régulation et de commande de charge multi-agent sur la base de l'informatique en périphérie selon la revendication 2, **caractérisé en ce que** la méthode spécifique de l'étape 2 comprend les étapes :

le réglage d'une ligne d'interconnexion (*i, j*) entre les réseaux d'énergie électrique régionaux et son admittance est $y_{i,j}$, permettant de connecter le réseau d'énergie électrique régional *i* au réseau d'énergie électrique régional *j* ; pour la tension locale $V_j$ et la position de phase $\theta_j$ d'un point de connexion du réseau d'énergie électrique régional donné *j*, la transmission de la puissance active $P_{i,j}$ sur le point de connexion du réseau d'énergie électrique régional *i* par le biais de la ligne d'interconnexion (*i, j*), comme représenté dans la formule suivante :

$$P_{i,j} = V_i^2 \, \mathrm{Re}(y_{i,j}) - V_i \tilde{V}_j (\mathrm{Re}(y_{i,j})\cos(\theta_i - \tilde{\theta}_j) + \mathrm{Im}(y_{i,j})\sin(\theta_i - \tilde{\theta}_j)) \tag{11}$$

où $V_i$ et $\theta_i$ sont respectivement la tension locale et la position de phase du point de connexion du réseau d'énergie électrique régional *i*, $\tilde{V}_i$ et $\tilde{\theta}_i$ ainsi que $\tilde{V}_j$ et $\tilde{\theta}_j$ sont respectivement la tension et la position de phase d'une région de couplage, perçues par les points de connexion du réseau d'énergie électrique régional *i* et du réseau d'énergie électrique régional *j* par le biais de l'informatique en périphérie, et répondent à la contrainte d'égalité suivante :

$$\begin{bmatrix} V_i \\ \theta_i \end{bmatrix} = \begin{bmatrix} \tilde{V}_i \\ \tilde{\theta}_j \end{bmatrix}, \begin{bmatrix} V_j \\ \theta_j \end{bmatrix} = \begin{bmatrix} \tilde{V}_i \\ \tilde{\theta}_j \end{bmatrix} \tag{12}$$

en utilisant $v_{(\cdot)}$ et $\tilde{v}_{(\cdot)}$ pour exprimer respectivement le vecteur $[V_{(\cdot)}, \theta_{(\cdot)}]^T$ et $[\tilde{V}_{(\cdot)}, \tilde{\theta}_{(\cdot)}]^T$ où $(\cdot)$ exprime un symbole *i* ou *j* ;
si $V_i = \tilde{V}_j$ et $\theta_i = \tilde{\theta}_j$, $\theta_i = \tilde{\theta}_j$, et
si la ligne d'interconnexion n'existe pas dans le réseau d'énergie électrique régional *i* et le réseau d'énergie électrique régional $y_{i,j} = 0$, et $P_{i,j} = 0$;
entre temps, l'obtention d'une relation d'équilibre de puissance de réseau d'énergie électrique dans la région en fonction du modèle de données de nœud de puissance électrique dans les réseaux d'énergie électrique régionaux construits à l'étape 1 et la perte de ligne perçue de manière intelligente par la ligne d'interconnexion entre des régions, et afin de garantir un fonctionnement sûr et fiable du réseau d'énergie électrique, la construction d'un modèle mathématique de puissance active nette chargée par une barre omnibus du réseau d'énergie électrique régional *i*, comme représenté dans la formule suivante :

$$P_i = \sum_{k \in \kappa_i^{\mathrm{G}}} P_{i,k}^{\mathrm{G}} + \sum_{l \in \kappa_i^{\mathrm{DR}}} P_{i,l}^{\mathrm{DR}} + P_i^{\mathrm{W}} + P_i^{\mathrm{PV}} - P_i^{\mathrm{D}} - \sum_{(i,j) \in T_i} P_{i,j} \tag{13}$$

où $\kappa_i^{\mathrm{G}}$ et $\kappa_i^{\mathrm{DR}}$ expriment respectivement un dispositif de génération de puissance et un dispositif de charge flexible dans le réseau d'énergie électrique régional *i* ; en supposant que $T = \{\forall(i,j)|\forall i, j \in M, i \ne j\}$ exprime une ligne d'interconnexion réglée entre tous les réseaux d'énergie électrique régionaux, où toutes les lignes d'interconnexion inter-réseaux $T_i$ connectées au réseau d'énergie électrique régional *i* sont définies par $T_i = \{\forall(i,j)|\forall j \in M, i \ne j\}$, *M* est un ensemble de tous les réseaux d'énergie électrique régionaux dans la région, et $P_i^{\mathrm{D}}$ est la puissance demandée de charge rigide dans le réseau d'énergie électrique régional *i* ;
la division complète de multiples réseaux d'énergie électrique régionaux dans une certaine plage en réseaux d'énergie électrique d'intervalle, permettant aux lignes d'interconnexion et à la perte de réseau d'exister dans différents réseaux d'énergie électrique d'intervalle également, en supposant que tous les réseaux d'énergie électrique d'intervalle sont entièrement connectés, à savoir qu'aucun réseau d'énergie électrique d'intervalle indépendant n'existe, et que tous les réseaux d'énergie électrique d'intervalle forment tout le système de réseau d'énergie électrique, construisant ainsi le modèle pour équilibrer la perte de ligne des réseaux d'énergie électrique d'intervalle et la puissance du système, comme représenté dans la formule :

$$P_{s,t} = V_s^2 \operatorname{Re}(y_{s,t}) - V_s V_t (\operatorname{Re}(y_{s,t}) \cos(\theta_s - \theta_t) + \operatorname{Im}(y_{s,t}) \sin(\theta_s - \theta_t)) \quad (14a)$$

$$\sum_{s \in R} \sum_{i \in s} P_i + \sum_{(s,t) \in R_s} P_{s,t} = 0 \quad (14b)$$

où $P_{s,t}$ est la perte de ligne de la ligne d'interconnexion entre le réseau d'énergie électrique d'intervalle s et le réseau d'énergie électrique d'intervalle t, tandis que $V_s$ et $V_t$ ainsi que $\theta_s$ et $\theta_t$ sont respectivement les tensions et les angles de phases de deux extrémités de la ligne d'interconnexion entre deux réseaux d'énergie électrique d'intervalle, et $y_{s,t}$ est l'admittance de la ligne d'interconnexion d'intervalle.

4. Procédé de régulation et de commande de charge multi-agent sur la base de l'informatique en périphérie selon la revendication 3, **caractérisé en ce que** la méthode spécifique de l'étape 3 comprend les étapes :

en considérant seulement le coût total, à savoir le coût de génération et le coût de réponse à la demande du réseau d'énergie électrique régional *i*, la construction d'une fonction d'objet en considérant les bénéfices économiques, comme représenté dans la formule suivante :

$$C_i = \sum_{k \in \kappa_i^{\mathrm{G}}} C_k^{\mathrm{G}}(P_k^{\mathrm{G}}) + \sum_{k \in \kappa_i^{\mathrm{DR}}} C_k^{\mathrm{DR}}(P_k^{\mathrm{DR}}) \quad (15)$$

en considérant le problème de contrainte, l'expression du problème optimal des bénéfices économiques du réseau d'énergie électrique régional *i* comme :

$$\min_{x_i} \quad C_i(x_i) \quad (16a)$$

$$\mathrm{s.\,t.} \quad h_i(x_i) \le 0, \quad \forall (i,j) \in T_i \quad (16b)$$

dans la formule (16b), définissant la variable de décision $x_i$ sous la forme de :

$$x_i = \left\{ P_k^{\mathrm{G}}, P_l^{\mathrm{DR}}, V_i, \theta_i, \tilde{V}_j, \tilde{\theta}_j \,\middle|\, k \in \kappa_i^{\mathrm{G}}, l \in \kappa_i^{\mathrm{DR}} \right\}$$

où $h_i(x_i)$ exprime la valeur de vecteur de la contrainte et comprend la contrainte du volume de générateur dans le réseau d'énergie électrique régional *i* comme représenté dans la formule (2), la contrainte du volume de la réponse à la demande comme représenté dans la formule (10), la contrainte de la puissance inter-change de la ligne d'interconnexion comme représenté dans la formule (11), et les contraintes d'équilibre de puissance comme représenté dans la formule (13) et la formule (14) ;

ainsi en considérant des réseaux d'énergie électrique régionaux d'interconnexions multiples, le problème optimal des bénéfices économiques de réseaux d'énergie électrique d'intervalle est modélisé comme suit :

$$\min_{x_i, i \in M} \quad \sum_{i \in M} C_i(x_i) \qquad (17a)$$

$$\text{s. t.} \quad h_i(x_i) \le 0, \quad \forall i \in M$$

$$v_i - \tilde{v}_i = 0, \quad \forall (i, j) \in T \qquad (17b)$$

où la formule (17b) décrit que la variable de couplage $\tilde{v}_i = [\tilde{V}_i, \tilde{\theta}_i]^T$ entre des lignes est considérée comme une interface ou un service qui est fourni par le réseau d'énergie électrique régional $i$ pour toutes les régions connectées au réseau d'énergie électrique régional $i$ du fait de l'existence de la ligne d'interconnexion (i, $j$).

**5.** Procédé de régulation et de commande de charge multi-agent sur la base de l'informatique en périphérie selon la revendication 4, **caractérisé en ce que** la méthode spécifique de l'étape 4 comprend les étapes :

la conversion de la fonction d'objet optimale de bénéfices économiques des réseaux d'énergie électrique d'intervalle dans la matrice de Lagrange augmentée, et tout d'abord en réécrivant $C_i$ dans la forme développée suivante :

$$\overline{C}_i(x_i) = \begin{cases} C_i(x_i), & h_i(x_i) \le 0 \\ \infty, & h_i(x_i) > 0 \end{cases} \qquad (18)$$

pour séparer l'objet minimum avec la condition de contrainte de ligne d'interconnexion, définissant un indice de contrainte pour la fonction d'objet, comme représenté dans la formule :

$$I(x) = \begin{cases} 0, & x = 0 \\ \infty, & x \ne 0 \end{cases} \qquad (19)$$

en permettant que la formule (17) soit équivalente à :

$$\min \sum_{i \in M} \overline{C}_i(x_i) + \sum_{(i,j) \in T} I(v_i - \tilde{v}_i) \qquad (20)$$

en introduisant des variables auxiliaires $v_i^c = \left[ V_i^c, \theta_i^c \right]^T$ et $\tilde{v}_i^c = \left[ \tilde{V}_i^c, \tilde{\theta}_i^c \right]^T$ représentant toutes les lignes de connexion $(i,j) \in T$ connectées au réseau d'énergie électrique régional $i$, en réécrivant la formule (20) comme suit :

$$\min \sum_{i \in M} \overline{C}_i \left( x_i \right) + \sum_{(i,j) \in T} I \left( v_i^c - \tilde{v}_i^c \right) \qquad (21a)$$

$$\text{s. t.} \quad v_i - \tilde{v}_i^c = 0, \quad \forall (i,j) \in T$$

$$\tilde{v}_i - v_i^c = 0, \quad \forall (i,j) \in T \qquad (21b)$$

où deux termes de la fonction d'objet (21a) sont séparés avec la condition de contrainte, et en outre une fonction de Lagrange augmentée est construite, comme représenté dans la formule suivante :

$$L_\rho \left( x, v^c, \tilde{v}^c, \lambda \right) = \sum_{(i,j) \in T} I \left( v_i^c - \tilde{v}_i^c \right) + \sum_{i \in M} \left( \overline{C}_i \left( x_i \right) \right.$$

$$+ \lambda_i^T \begin{bmatrix} v_i - \tilde{v}_i^c \\ \tilde{v}_j - v_j^c \end{bmatrix}_{T_i} + \frac{\rho}{2} \begin{bmatrix} v_i - \tilde{v}_i^c \\ \tilde{v}_j - v_j^c \end{bmatrix}_{T_i}^T \begin{bmatrix} v_i - \tilde{v}_i^c \\ \tilde{v}_j - v_j^c \end{bmatrix}_{T_i} \left. \right) \qquad (22)$$

définissant $x = [x_1, \cdots, x_M]^T$ comme une variable de commande, et $\lambda_i^T$ comme un coefficient de Lagrange représentant des différences de tension entre la ligne de connexion extérieure du réseau d'énergie électrique régional $i$, de sorte que $\begin{bmatrix} v_i - \tilde{v}_i^c \\ \tilde{v}_j - v_j^c \end{bmatrix}_{T_i}$

$$\text{diag} \left\{ v_i - \tilde{v}_i^c, \tilde{v}_j - v_j^c \middle| (i,j) \in T_i \right\} \cdot 1$$

est défini par et
est le facteur de pénalité du multiplicateur de Lagrange augmenté, $\rho > 0$ ;
la résolution de la fonction de Lagrange augmentée par la méthode des directions alternées de multiplicateurs, afin de réaliser la régulation et la commande de charge du système de réseau d'énergie électrique.

start

build electric power node data models in regional power grids

considering coupling relationship and line losses between the regional power grids, build perception model based on edge computing

regard a single regional power grid as an agent, according to the agents' optimization object classifying, set the object function of the regional power grids

convert the object function into an augmented lagrange function, and solve the function to achieve regulation and control of load of the power grid system

end

FIG. 1

tie-line $(i, j)$

$V_i$ $\tilde{V}_i$ $\tilde{V}_j$ $V_j$

$\theta_i$ $\tilde{\theta}_i$ $\tilde{\theta}_j$ $\theta_j$

$y_{i,j}$

region $i$ region $j$

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108599270 A
- US 2016179077 A1